# EUROPEAN PATENT APPLICATION

(11) **EP 4 711 538 A1**
(43) Date of publication of application: **18.03.2026**
(21) Application number: 24807625.9
(22) Date of filing: 25.03.2024
(51) Int. Cl.: E03C 1/266, B09B 3/60, B09B 101/70

(54) **FOOD DISPOSAL APPARATUS**

(30) Priority: 12.05.2023 KR 20230061876
(71) Applicant: LG Electronics Inc., Yeongdeungpo-gu Seoul 07336 (KR)
(72) Inventor: WON, Kwangjae, Seoul 06772 (KR); YU, Hyosang, Seoul 06772 (KR); KIM, Minchul, Seoul 06772 (KR); PARK, Jeongyeon, Seoul 06772 (KR)
(74) Representative: Ter Meer Steinmeister & Partner
(86) International application number: PCT/KR2024/095633
(87) International publication number: WO 2024/237755

(57) **Abstract**

The present embodiment provides a food disposal apparatus, comprising: a solid-liquid separation part, which comprises a filter part for receiving food from an inlet and separating liquid from the food, and which transports, on the horizontal plane, at least a portion of the filter part which is holding the solids of the food and drops the food downward; a decomposition part which is disposed below the solid-liquid separation part and decomposes the dropped food by means of microorganisms; and a collection part which stores the decomposed food, wherein the filter part can be separated from the solid-liquid separation part to the outside through the inlet. Accordingly, in a horizontal transport structure, all individual components that come into contact with food can be separated and can thus be cleaned and managed, and therefore can be maintained in a clean state.

## Description

### Technical Field

An embodiment relates to a food disposal apparatus, and particularly, to a built-in type food disposal apparatus that can be installed inside a sink.

### Background Art

In general, food disposal apparatuses are divided into built-in type food disposal apparatuses, which are installed beneath a sink and dispose food waste directly injected from a sink inlet, and standing type food disposal apparatuses which are provided separately from the sink to collect and dispose dehydrated solid food waste.

In the case of the standing type food disposal apparatuses, solid food waste that has undergone dehydration is collected and decomposed into inorganic matter primarily through microbial decomposition, and the decomposed matter is collected and discharged.

Meanwhile, the sink built-in type food disposal apparatus includes a grinder that grinds food waste fed through an inlet and a dehydrator that dehydrates the ground food waste.

In general, the grinding and dehydration processing of food waste is configured to be performed sequentially. Food waste passes through the grinder and then the dehydrator to be loaded into a storage container, and liquid separated from the food waste is discharged through a drain hose. In addition, remaining food waste is collected in a food collection container and disposed when a certain amount accumulates.

Users select and use food disposal apparatuses according to food disposal methods and installation methods, considering various circumstances such as environmental conditions, preferences, etc.

However, in the food disposal apparatuses, the built-in type or the standing type collects food waste for a predetermined period of time for disposal, and the food waste collected during this period decomposes and generates odors. In particular, decomposition-type food disposal apparatuses using microorganisms have a problem of generating very severe odors because they must satisfy high temperature and humidity conditions during decomposition.

Korean Patent No. 2017-0107837 discloses a food disposal apparatus installed beneath a sink to dispose food. In Korean Patent No. 2017-0107837, microorganisms are used and stirred with food in a decomposition part and fermented to form compost. However, in such technology, when a particle size of the generated compost becomes small, the compost passes through perforations and is discharged into a sewage pipe together with water.

Furthermore, when food waste becomes small particles and is continuously discharged through perforations in a bottom without additional food input to the decomposition part, a problem occurs where all food and microorganisms in the decomposition part are discharged. In particular, when the food disposal apparatus is not used for a long period, a problem occurs where the microorganisms in the decomposition part die.

In order to prevent the discharge of such microorganisms, microbial carriers are sometimes placed in the decomposition part, but when the decomposition part is used for a long period of time, the carriers are deformed due to friction between the stirrer and the perforations, and in most cases lose their functions.

Meanwhile, Korean Patent No. 2011-0031805 discloses a built-in type food disposal apparatus that is directly connected to a bottom drain outlet of the sink to separate solids and liquids. In such Korean Patent No. 2011-0031805, a cylindrical transfer having rotating blades disposed therein is disclosed as a transfer for separating solids and liquids.

The transfer moves the food from above a drain to above a drying part by rotation.

However, such a cylindrical transfer requires a transfer space equivalent to four times that of a general sink drain, with at least three times being essential. Therefore, a space for transfer occupies the majority of an entire food disposal apparatus, and a drying part space where main operations are performed becomes relatively narrow.

Patent No. 2011-0031805 discloses only grinding followed by drying rather than decomposition as food disposal, which causes environmental problems.

Meanwhile, Japanese Patent No. 4022036B2, which is prior art, relates to an apparatus for dehydrating and grinding food waste, wherein a plurality of separate disposal chambers are disclosed as spaces for dehydration and grinding. In the disposal chambers, dehydrated food waste undergoes fermentation and drying treatment by being stirred with an stirring body through a fermentation chamber and a drying chamber.

In such a disposal chamber, as drying proceeds by stirring and a first space becomes full, overflow occurs and a material moves to a second space, and when the second space is filled, overflow occurs again and the material moves to a third space, and is then discharged through an outlet.

However, such an overflow method only discharges disposed food that exceeds a partition wall when the disposed food accumulates to a height of the partition wall, making fine control of the discharged disposed material impossible. Further, there is a problem of discharging fermented disposed material through an inclined outlet.

In the case of a sink-integrated type such as Korean Patent No. 2011-0031805, the food disposal apparatus is installed in a conventional sink, for example, at a lower portion of the sink. An outlet of a sink bowl is replaced with a food inlet of the food disposal apparatus so that a user can conveniently discharge food through the outlet. Further, once installed, a water supply and drainage structure can be stably maintained, and since the food disposal apparatus is not exposed to an exterior, there is an advantage of improving aesthetics.

However, since the sink-integrated type food disposal apparatus is not easy to manage through removal and replacement once installed, disadvantages such as bacterial growth and malodor become prominent if cleaning of the areas contacted by food is not performed at appropriate times.

Therefore, there is an increasing need for technology that can improve a problem of a conventional patent in the sink-integrated type food disposal apparatus. In particular, consideration is needed for a method to allow only food that has been decomposed at a certain level or higher to be moved, and in the case of dehydration after grinding, technology that can proceed with dehydration without grinding is required to prevent a risk of ground food being discharged to the drain along with water. Furthermore, in order to implement an environmentally friendly food disposal apparatus, high-efficiency decomposition conditions are required for fermentation of incoming food waste without grinding.

Further, miniaturization of an entire apparatus is required by miniaturizing spaces other than a space where food is fermented or collected.

In addition, there is a risk of odor and bacterial growth in most components that come into contact with food, requiring individual cleaning possibilities, and minimization of spaces in movement sections is required, except for spaces where food is stored for a long period of time, such as a decomposition part and a collection part.

### [Prior Art Document] / [Patent Document]

Korean Patent Unexamined Publ. No. 2017-0107837 (Publication Date: September 26, 2017)
Japanese Patent Application No. 4022036B2 (Publication Date: December 18, 2001)
Korean Patent Unexamined Publ. No. 2011-0031805 (Publication Date: March 29, 2011)

### [Disclosure] / [Technical Problem]

The embodiment provides a built-in type food disposal apparatus integrated with a sink, which may collect and remove compost by performing fermentation without grinding of food waste.

Another object of the embodiment is to provide a solid-liquid separation module having a horizontal movement structure in which when food waste is input, the food waste horizontally moves in a solid state with liquid removed at an input inlet to be transferred to a lower decomposition part.

The embodiment provides a detachable and assemblable structure that enables all individual components that come into contact with food in a horizontal transfer structure to be separated, and washed and managed.

The embodiment provides a solid-liquid separation module having a suction module capable of creating negative pressure inside the food disposal apparatus and suctioning odors from an inlet connected to a drain of the sink to discharge the odors through a sewage pipe.

In addition, another object of the present disclosure is to provide a food disposal apparatus that can utilize a limited space in a lower portion of the sink by placing a compost transfer part for collecting only compost fermented in a decomposition part into a neighboring collection part, and particularly, minimize a space other than a space where food is fermented or collected.

### [Technical Solution]

An embodiment provides a food disposal apparatus including: a solid-liquid separation part, which includes a filter part for receiving food from an inlet and separating liquid from the food, and which transfers, on the horizontal plane, at least a portion of the filter part which is holding the food and drops the food downward; and a decomposition part which is placed below the solid-liquid separation part and decomposes the dropped food by means of microorganisms, in which the filter part is enabled to be separated from the solid-liquid separation part through the inlet.

The filter part may include a side surface including perforations for separating and discharging only liquid from the food, and a bottom surface detachable from or coupleable to the side surface.

The side surface of the filter part may include a filter surface which is perforated to separately discharge the liquid from the food, and a lower rim supporting a lower portion of the filter surface and including at least one coupling protrusion for sliding coupling with the bottom surface of the filter part, the bottom surface of the filter part may include a flat support surface, and a guide protrusion which protrudes upward from the support surface and guides sliding coupling with the side surface, and at least one coupling hole to which the coupling protrusion of the lower rim of the side surface of the filter part is fitted may be formed on a side surface of the guide protrusion.

The food disposal apparatus is provided.

Accordingly, in a horizontal transport structure, all individual components that come into contact with food can be separated and can thus be cleaned and managed, and therefore can be maintained in a clean state.

Therefore, the side surface of the filter part are separable from the bottom surface, providing a structure that enables food transfer by selectively moving only the side surface.

The solid-liquid separation part may be divided into a solid-liquid separation space where solids and liquid of the food are separated and a transfer space where the solid food is transferred to the decomposition part.

A lower portion of the solid-liquid separation space may be connected to a drain that discharges only liquid from the food, and an outlet of the solid-liquid separation part which communicates with an inlet of the decomposition part may be formed at a lower portion of the transfer space.

When the filter part is placed in the solid-liquid separation space, the transfer space may be sealed from the solid-liquid separation space.

Sealing of the solid-liquid separation space and the transfer space may prevent liquid from infiltrating into the decomposition part that communicates with the transfer space.

The solid-liquid separation part may further include a transfer module performing a movement for moving the solid food from the solid-liquid separation space to the transfer space.

The transfer module may include a transfer body connected to the side surface of the filter part and moving the side surface of the filter part on the horizontal plane, and a movement motor moving the transfer body.

The transfer module may further include a pinion that rotates in conjunction with a shaft of the movement motor, and a linear rack which moves linearly by the pinion, and the transfer body may be connected to the linear rack, and may move the side surface of the filter part between the solid-liquid separation space and the transfer space on the horizontal plane.

With this implementation of the transfer module, the size of the solid-liquid separation part may be miniaturized by a short movement path.

The transfer body may include a first body which extends from the linear rack, and a second body which is elastically coupled to the first body, and fixed to the side surface of the filter part and moves the side surface of the filter part according to the movement of the linear rack.

The second body may include a front surface facing the first body and a rear surface coupled to the side surface of the filter part, and a fixing protrusion which fixes an elastic body elastically coupled to the first body may protrude on the front surface.

The fixing protrusion may protrude at a central portion of the second body.

One side of the first body may be bent and extended from the linear rack, and the other side of the first body may be a free end.

A movement distance of the second body may be the same as a movement distance of the filter part.

A first sealing member may be formed at a border of the transfer body, a second sealing member may be formed on a boundary portion between the solid-liquid separation space and the transfer space, and the first sealing member and the second sealing member may form a double sealing structure.

The second sealing member may form a closed loop surrounding the boundary portion between the solid-liquid separation space and the transfer space on an internal surface of the case of the solid-liquid separation part, and when the filter part is located in the solid-liquid separation space, and the transfer body stops at boundary portion between the solid-liquid separation space and the transfer space, the first sealing member may be closely attached to a front surface of the second sealing member to form the double sealing structure.

Such a double sealing structure enables sealing of the transfer space, i.e., the decomposition part, during solid-liquid separation.

The transfer module may further include at least one guide bar extending from the case of the solid-liquid separation part to guide the linear movement of the linear rack.

### [Advantageous Effects]

Through the technical solution, the food disposal apparatus is easy to post-process and environmentally friendly as food is decomposed by microorganisms.

According to at least one of the embodiments of the present disclosure, in the sink-integrated type food disposal apparatus, food waste can be fermented in a solid state without grinding, thereby preventing discharge of food waste into a drain through grinding, which is environmentally friendly.

The embodiment can provide various structures in which when food waste is input, the foot waste horizontally moves in a solid state with liquid removed at an input inlet and transferred to a lower decomposition part to transfer the solid to the lower decomposition part through minimal movement by utilizing a minimal space.

Further, the embodiment can provide a foot disposal apparatus which is hygienically usable because all individual components that come into contact with food in a horizontal transfer structure can be separated for washing and maintenance.

Further, negative pressure is formed inside the food disposal apparatus and odors can be drawn inward from an inlet part connected to the sink drain and discharged through a sewer pipe, thereby minimizing user discomfort caused by odors.

In addition, a lower module including the decomposition part and the collection part is formed as a drawer type and completely separated from a main body, thereby enabling easy removal of microorganisms and compost as well as removal of spillage.

Further, horizontal-vertical movement in which moisture is removed at the inlet and food waste is horizontally moved and thrown into the lower decomposition part, and horizontal movement at an elevated position considering a particle size for movement of compost generated in the decomposition part to the neighboring collection part and vertical dropping to the collection part can be performed to optimize and utilize a limited space under the sink.

### [Description of Drawings]

FIG. 1 is a front perspective view of a food disposal apparatus according to an embodiment of the present disclosure.
FIG. 2 is an exploded perspective view of a main body and a lower module of the food disposal apparatus according to an embodiment of the present disclosure.
FIG. 3 is a perspective view illustrating an interior of the food disposal apparatus of FIG. 1.
FIG. 4 is a front view illustrating the interior of the food disposal apparatus of FIG. 1.
FIG. 5 is an exploded perspective view illustrating an inlet part of the food disposal apparatus of FIG. 1.
FIG. 6a is a partial cross-sectional view of the inlet part of FIG. 5 taken along line I-I', and FIG. 6b is a detailed perspective view of a cover part and a cover guide.
FIGS. 7a to 7f are detailed views of a solid-liquid separation part of a first embodiment of the food disposal apparatus of FIG. 1.
FIGS. 8a to 8d are flowcharts illustrating an operation of the solid-liquid separation part of FIG. 1.
FIG. 9 is a perspective view illustrating an interior of the lower module of the food disposal apparatus of FIG. 1.
FIG. 10 is a perspective view illustrating an interior of a transfer part of the lower module of the food disposal apparatus of FIG. 1.
FIGS. 11a and 11b are state diagrams illustrating coupling of the transfer part and a collection part.
FIGS. 12a to 12d are schematic configuration diagrams illustrating a drainage deodorization module of the food disposal apparatus of FIG. 1.
FIGS. 13a to 13d are flowcharts illustrating an operation of the food disposal apparatus of FIG. 1.
FIGS. 14a and 14b are state diagrams of a solid-liquid separation part of a second embodiment.
FIGS. 15a and 15b are state diagrams of a solid-liquid separation part of a third embodiment.
FIGS. 16a and 16b are state diagrams of a solid-liquid separation part of a fourth embodiment.
FIGS. 17a and 17b are state diagrams of a solid-liquid separation part of a fifth embodiment.
FIG. 18 is a state diagram of a solid-liquid separation part according to a sixth embodiment.
FIGS. 19a and 19b are state diagrams of a solid-liquid separation part of a seventh embodiment.
FIGS. 20a and 20b are state diagrams of a solid-liquid separation part of an eighth embodiment.

### [Best Mode]

The directional expressions such as "front F/rear R/left Le/right Ri/upper U/lower D" mentioned hereinafter are defined as shown in the drawings, but this is merely for the purpose of enabling clear understanding of the embodiment, and it is of course possible to define each direction differently depending on where the reference point is established.

The use of terms with expressions such as "first, second" etc., before the components mentioned hereinafter is merely to avoid confusion of the referenced components, and is unrelated to the order, importance, or hierarchical relationship among the components. For example, an embodiment including only the second component without the first component is also implementable.

In the drawings, the thickness or size of each component has been exaggerated, omitted, or schematically illustrated for convenience and clarity of description. Also, the size and area of each component do not entirely reflect the actual size or area.

Furthermore, the angles and directions mentioned in the process of describing the structure of the embodiment are based on those depicted in the drawings. In the description of the structure in the present disclosure, when the reference points and positional relationships for angles are not clearly mentioned, reference should be made to the relevant drawings.

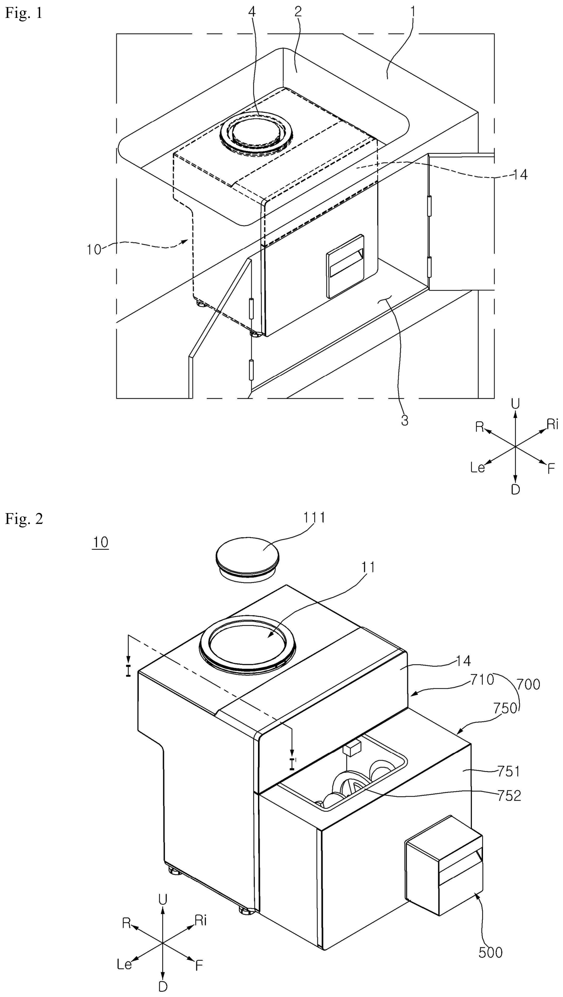

Hereinafter, a food disposal apparatus 10 according to an embodiment will be described with reference to FIGS. 1 to 4.

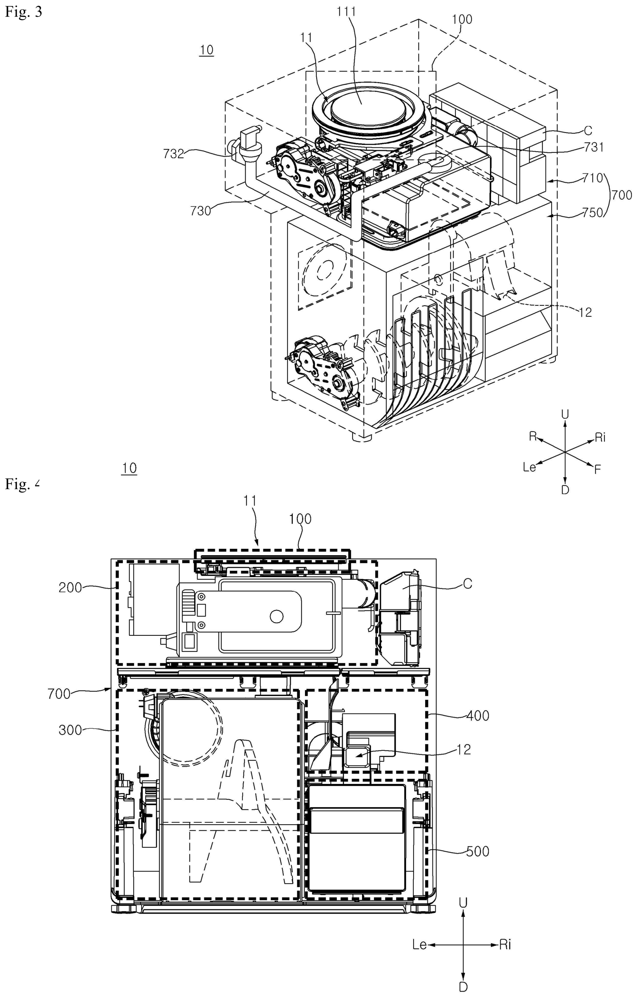

FIG. 1 is a front perspective view of a food disposal apparatus 10 according to an embodiment of the present disclosure, FIG. 2 is an exploded perspective view of a main body 700 and a lower module 750 of the food disposal apparatus 10 according to an embodiment of the present disclosure, FIG. 3 is a perspective view illustrating an interior of the food disposal apparatus 10 of FIG. 1, and FIG. 4 is a front view illustrating the interior of the food disposal apparatus 10 of FIG. 1.

The food disposal apparatus 10 of the embodiment is a microbial decomposition scheme, and food to be disposed enters an inlet 11 located on a top of the food disposal apparatus 10 and undergoes a decomposition process inside the food disposal apparatus 10. Compost composted from food decomposed by microorganisms may be discharged through an outlet 12 located at a bottom of the food disposal apparatus 10 and collected by a collection part 500, and then discharged to the outside all at once.

The food disposal apparatus 10 is enabled to be provided as an integral type within an interior 3 of a sink 1. When the food disposal apparatus 10 is built into the sink 1, an inlet part 100 of the food disposal apparatus 10 may be configured with a size and a shape corresponding to a drain 4 on a bottom surface of a sink bowl 2. Therefore, when the food disposal apparatus 10 is installed in the sink 1, the inlet part 100 of the food disposal apparatus 10 is coupled to the drain 4 of a legacy sink bowl 2 without a need to provide a separate sink bowl 2 for coupling to conveniently use the food disposal apparatus 10.

The food disposal apparatus 10 of the embodiment, which is built into the interior 3 of the sink 1 has a top surface disposed parallel to the sink bowl 2 of the sink 1, a bottom surface parallel to the top surface and facing a bottom of the sink 1, and front, rear, left, and right side surfaces between the top surface and the bottom surface, and is implemented to have an internal space.

The front surface of the food disposal apparatus 10 is defined as a side facing the user when the user stands in front of the sink 1, the rear surface is defined as the side parallel to the front surface and facing the rear surface of the sink 1, a side surface bent to the left from the front surface is defined as a left surface, and a side surface bent to the right from the front surface is defined as a right surface.

In FIGS. 1 and 2, the top surface and the bottom surface of the food disposal apparatus 10 have different areas from each other, a rear recessed portion 15 is formed according to an area difference between the top surface and the bottom surface, and a distributor (not illustrated) in the interior 3 of the sink 1 may be located in the rear recessed portion 15.

The left surface and the right surface are also formed in angular shapes where at least a portion of a side facing the rear is recessed by the rear recessed portion 15.

Therefore, the food disposal apparatus 10 according to the embodiment has an overall hexahedral shape, but may be partially recessed at a lower rear portion, and is enabled to be variously provided according to a shape of the sink 1. That is, when a top surface inlet part 100 of the food disposal apparatus 10 is enabled to be coupled to the drain 4 of the sink 1, and a drainage/deodorization module 600 of the food disposal apparatus 10 is placed to be coupleable to a drain pipe of the sink 1, the food disposal apparatus 10 is enabled to be modified into any structure as long as the food disposal apparatus 10 has an internal space.

The food disposal apparatus 10 is constituted by an upper module 710 in which the inlet 11 is placed on the top surface of the food disposal apparatus 10, and a solid-liquid separation part 200 connected to the inlet, and separating input food waste into a solid and a liquid, and transfers the solid is mounted, and a lower module 750 placed below the upper module 710.

The upper module 710 may include a display part 14 on the front surface of the food disposal apparatus 10 and is integrated into a main body 700 (entire housing) of the food disposal apparatus 10.

The display part 14 may display information regarding a temperature and a humidity within the decomposition part 300, a composting degree, a remaining charge capacity of the collection part 500, and the like.

The lower module 750 is a functional module for receiving food from the upper module 710 for fermentation and storage, which is integrated as a single module and is separable from the main body 700 in which the upper module 710 is placed.

The lower module 750 may be pulled out from the front surface of the food disposal apparatus 10 in a first direction, i.e., in a front-to-rear direction, and separated from the main body 700. By separating the lower module 750, compost and microorganisms that are decomposed within the decomposition part 300 mounted in the lower module 750 is enabled to be directly collected, and cleaning of an interior of the decomposition part 300 is enabled.

Various techniques are applicable to facilitate easy assembly and disassembly of the lower module 750 from the main body 700. As an example, the lower module 750 is detachable from the main body 700 in a drawer-like manner.

The inlet cover 111 covers the inlet 11 to be openable and closable, and is provided to cover most of the area of the inlet 11 so that odors from the input food do not leak out.

The collection part 500 stores compost which is decomposed food. The collection part 500 implements a sealing structure to prevent odors generated inside the food disposal apparatus 10 from leaking out.

The food disposal apparatus 10 of the embodiment includes a water supply part 730 connected to the water supply pipe formed in the sink 1 and the drainage/deodorization module 600 connected to the drain pipe formed in the sink 1, and liquid discharged by solid-liquid separation of food is immediately discharged, while odors and moisture discharged from each module is guided to be discharged into the drain pipe through the drainage/deodorization module 600. Therefore, the food disposal apparatus 10 has a structure directly connected to the water supply pipe and the drain pipe of the sink 1 and does not have a separate hole for external odor discharge, so that when the food disposal apparatus 10 is operated and the inlet cover 111 covers the inlet 11, the interior has a sealing structure.

The collection part 500 connected to the outlet 12 of the food disposal apparatus 10 is separable from the outlet 12. The separated collection part 500 may be emptied of the contained compost and reassembled to the food disposal apparatus 10. The collection part 500 may be seated in the food disposal apparatus 10.

The inlet cover 111 may be provided in a circular shape so that the inlet cover 111 may rotate at the inlet 11. Specifically, the inlet cover 111 may ensure sealing force between the inlet cover 111 and the inlet 11 merely by being fitted and seated in the inlet 11. Therefore, engagement between the inlet cover 111 and the inlet 11 to an extent of fitting engagement or seating is required, without performing engagement with the inlet 11 through a screw structure or the like.

In addition, when the inlet cover 111 rotates at a predetermined angle or more while seated in place, a sensor detects the rotation to recognize the seating and operation initiation of the inlet cover 111.

That is, rotation of the inlet cover 111 may be used as an operation switch of the food disposal apparatus 10. For example, a sensing structure comprising a magnet and a Hall sensor may be provided in the inlet cover 111 and the inlet part 100 to which the inlet cover 111 is coupled. That is, after fastening the inlet cover 111 to the inlet 11 and rotating the inlet cover 111, the Hall sensor periodically detects the magnet to recognize a rotational operation, and accordingly recognizes operation initiation.

That is, an operation of seating the inlet cover 111 and an operation start command of the food disposal apparatus 10 may be distinguished and recognized. Therefore, the seating operation of the inlet cover 111 for preventing odor and the rotational operation for the operation start command of the food disposal apparatus 10 are distinguished, thereby enabling accurate operation start while minimizing user intervention.

FIGS. 3 and 4 are a perspective view and a front view illustrating the interior of the food disposal apparatus 10 according to the embodiment.

The following description is based on the components according to a food disposal process of the food disposal apparatus 10 according to the embodiment.

The inlet part 100 is the inlet 11 of the food disposal apparatus 10, which guides food to be input and transfers the food to the solid-liquid separation part 200 at a bottom thereof.

The solid-liquid separation part 200 is provided at the bottom of the inlet part 100 to separate the liquid from the food waste that moves from the inlet part 100. In order for the food to be easily decomposed, it is preferable to have a moisture content at a certain level or lower, and the solid-liquid separation part 200 serves to separate the liquid in an unground state and discharge the liquid to an external sink drain through the drainage/deodorization module 600.

The solid-liquid separation part 200 may receive water from a water supply part connected to an external sink water supply pipe and supply the water to the decomposition part 300 at the bottom thereof. An interior of the decomposition part 300 must maintain a predetermined amount of humidity for a microbial activity, and the humidity may be sprayed from the water supply part 730 of the solid-liquid separation part 200.

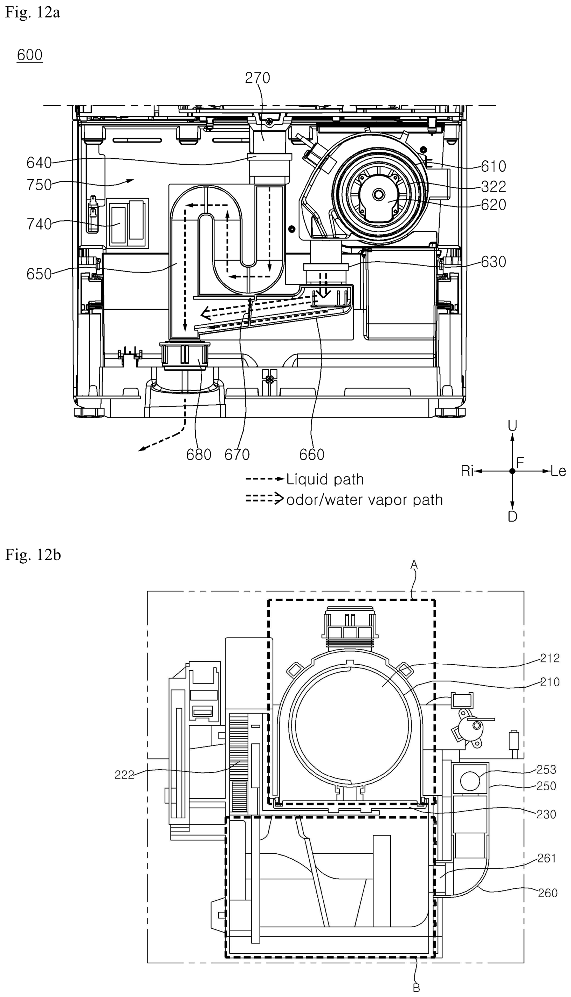

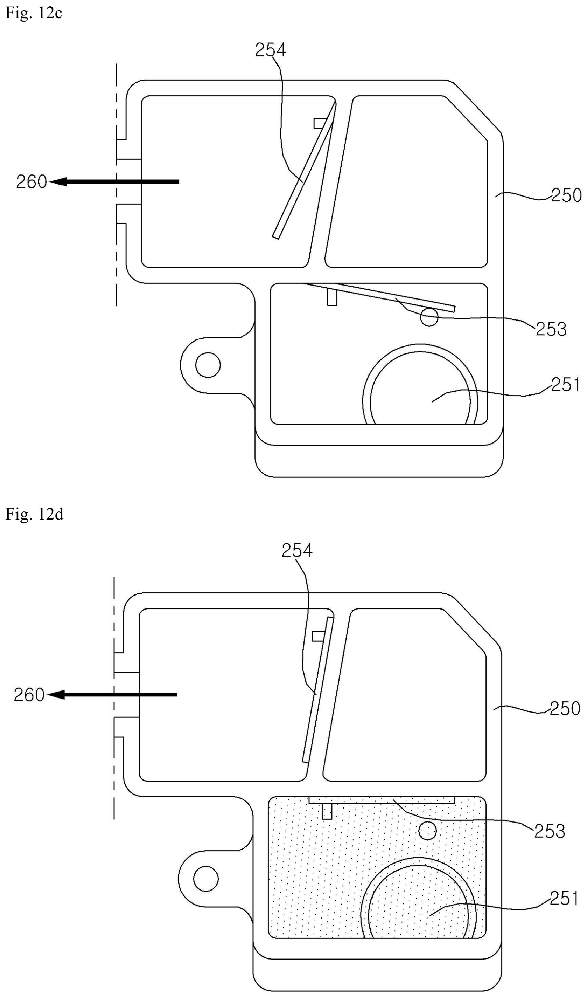

The water supply part 730 may be formed which penetrate an interior from an exterior of a case 201 of the solid-liquid separation part 200, and such a water supply part 730 may have a water supply pipe to be connected to the external water supply pipe. Meanwhile, the internal water supply pipe 730 provided inside the food disposal apparatus 10 connects the solid-liquid separation part 200 and the external sink water supply pipe through a pipe connection portion 732, and the internal drainage/deodorization module 600 connects the solid-liquid separation part 200 and an external drain through a pipe connection portion 680 (see FIG. 12A). The internal drainage/deodorization module 600 is partially branched and connected to perform a deodorization function, and also functions as a deodorization module that discharges odors together with the liquid to the external drain.

The solid-liquid separation part 200 drops only the solid from which the liquid is separated from the food input from the inlet part 100 to the decomposition part 300 at the bottom thereof by linear movement or rotational movement on a horizontal plane.

The decomposition part 300 may decompose solid food through microorganisms. The decomposition part 300 is provided within the lower module 750 below the solid-liquid separation part 200 to receive the food from which the liquid is removed, stir the received food with microorganisms, compost the food, and decompose the food into compost. The food decomposed into the compost is decomposed into a form such as compost with a small and uniform particle size without separate grinding.

Therefore, the compost has a small particle size and a reduced weight to move along a relatively large trajectory by stirring of an stirring member 350 and to be input into a transfer part 400 placed at the top.

The collection part 500 receives food of which decomposition is completed by the decomposition part 300 and preliminarily stores food to be discharged outside the food disposal apparatus 10. The collection part 500 may be placed horizontally with respect to the decomposition part 300. The decomposition part 300 and the collection part 500 may be partitioned by a side wall 360, and the compost from the decomposition part 300 may move to the collection part 500 through a side wall opening formed on the side wall 360.

The transfer part 400 transfers at least a portion of the compost generated by decomposition in the decomposition part 300 to the collection part 500. The transfer part 400 is placed horizontally with respect to the decomposition part 300 and is positioned above the collection part 500 to move food in the decomposition part 300 through an inlet 361 of a side wall 360 and through a top opening of the collection part 500. The transfer part 400 moves the food in the decomposition part 300 to the collection part 500 by mechanical driving.

That is, when light and small particle compost is moved upward by the stirring of the decomposition part 300, the compost is introduced into the transfer part 400 through the inlet 361 of the side wall 360 and discharged through the outlet 12 to the top opening of the collection part 500 by the mechanical driving of the transfer part 400.

The main body 700, which determines an appearance of the food waste processor 10 and a volume of the internal space, houses each module.

Specifically, the inlet part 100 and the solid-liquid separation part 200 are integrated and formed within the housing of the main body 700 forming the appearance of the food disposal apparatus 10 as the upper module 710, and the decomposition part 300, the collection part 500, and the transfer part 400 are mounted within the drawer-type lower module 750 that is physically separable from the housing of the main body 700.

Detailed configurations of individual functional modules are described below with reference to respective drawings.

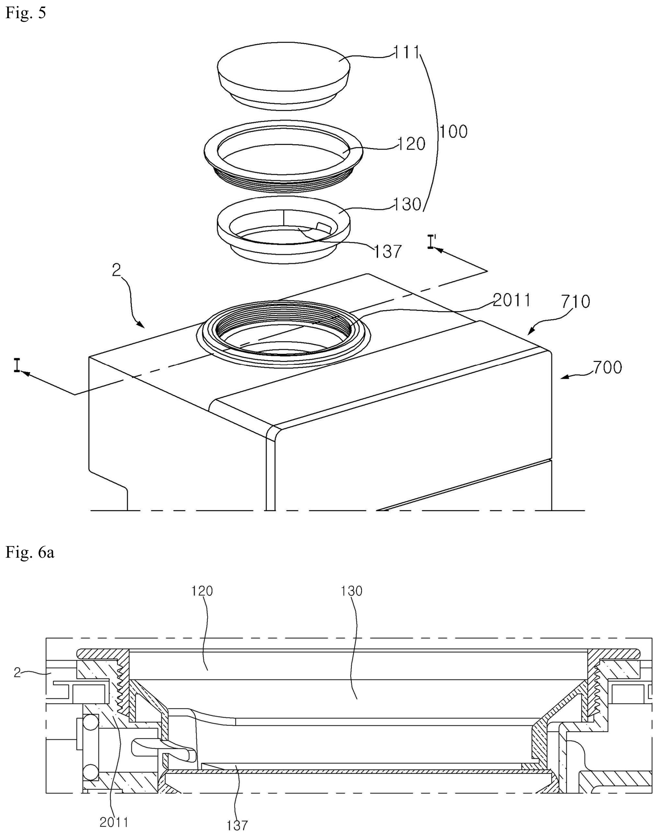

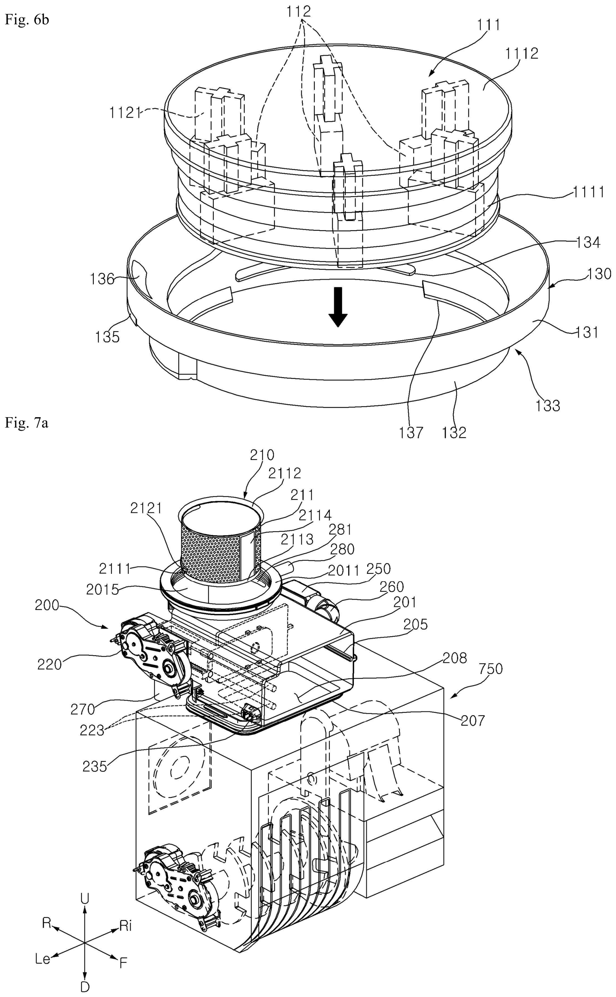

FIG. 5 is an exploded perspective view illustrating an inlet part of the food disposal apparatus 10 of FIG. 1, FIG. 6a is a partial cross-sectional view of the inlet part 100 of FIG. 5 taken along line I-I', and FIG. 6b is a detailed perspective view of an inlet cover and a cover guide.

The food disposal apparatus 10 according to the embodiment includes an inlet part 100 protruding from the top surface of the main body 700 and aligned with the drain 4 on the bottom surface of the sink bowl 2 of the sink 1.

The inlet part 100 includes a sink lock 120 that is coupled to the inlet of the solid-liquid separation part 200, an inlet cover 111, and a cover guide 130 that is assembled with the inlet cover 111 to detect a presence and operation start of the inlet cover 111.

An inlet 2011 of the solid-liquid separation part 200 is inserted into the drain 4 on the bottom surface of the sink bowl 2 and is coupled to communicate with the top opening of the solid-liquid separation part 200 within the sink 1 to form the input inlet 11 of the food disposal apparatus 10.

The inlet 2011 of the solid-liquid separation part 200 is formed to have a diameter equal to or smaller than a diameter of the drain 4 on the bottom surface of the sink bowl 2, but generally the diameter of the drain 4 is standardized, so the inlet 2011 of the solid-liquid separation part 200 may also be manufactured/distributed/sold according to a specification.

As illustrated in FIGS. 5 and 6a, the inlet 2011 of the solid-liquid separation part 200 is formed with a cylindrical side surface that is inserted into the drain 4 of the sink bowl 2 and extends from the side surface to the top surface of the sink bowl 2 to cover and compensate for a separation space caused by a diameter difference between the drain 4 of the sink 1 and the side surface.

In this case, the inlet 2011 of the solid-liquid separation part 200 has a step formed on the side surface thereof to form a seating surface having a narrower diameter than the top opening, and the seating surface is formed so that the cover guide 130 is seated thereon.

The sink lock 120 is formed on the side surface of the inlet 2011 of the solid-liquid separator 200 and is threaded to a side surface of the inlet 2011 of the solid-liquid separation part 200 so as to completely cover the separation space with the sink bowl 2 of the sink 1 and to be in close contact with the top surface of the sink bowl 2. Therefore, the food disposal apparatus 10 and the sink 1 are coupled within the sink bowl 2 without any separation space by the sink lock 120.

The cover guide 130 is placed above the side surface of the sink lock 120.

The cover guide 130 has a seating surface 137 on which the inlet cover 111 is seated, and guides the seating of the inlet cover 111.

Specifically, referring to FIG. 6b, the cover guide 130 has a cylindrical structure having a smaller diameter than the side surface of the sink lock 120.

The cover guide 130 includes a side surface 132 that overlaps with the side surface of the sink lock 120 within the side surface of the sink lock 120, and a seating surface 137 bent inwardly from a lower portion of the side surface 132, on which the inlet cover 111 is seated.

Further, the cover guide 130 includes an expansion rim 131 having a step 133 so that the cover guide 130 is seated on the seating surface 137 of the inlet of the solid-liquid separation part 200 above the side surface 132.

The expansion rim 131 has an inner surface that is inclined with a predetermined slope from top to bottom, and may be formed such that a diameter of a cross-section decreases downward.

In this case, an outer surface of the expansion rim 131 may be formed vertically along a vertical direction. Therefore, a step 133 is formed between the expansion rim 131 and the side surface 132, and the cover guide 130 is supported as the step 133 extends over the seating surface of the inlet 2011 of the solid-liquid separation part 200.

A locker slot 134 is formed in at least a portion of the side surface 132 of the cover guide 130.

The locker slot 134 is an opening portion for the locker 280 to be introduced into the slot 134 to fix the inlet cover 111 and the cover guide 130.

The locker slot 134 may be formed as a rectangular opening that extends longitudinally along the side surface 132 with a predetermined width, and may include a ridge with an intermediate region inclined upward corresponding to a shape of an arm of the locker 280.

In this case, the seating surface 137 may be removed at the bottom corresponding to a region where the locker slot 134 is formed, but is not limited thereto. That is, when the seating surface 137 is removed, the seating surface 137 may have a C-shape with a portion removed rather than a ring shape.

Meanwhile, a guide part 136 is formed on an inner surface of the expansion rim 131 of the cover guide 130.

The guide part 136 provides a light guide path for conducting and transmitting upward a guidance indication received from a control unit (not illustrated) placed in the solid-liquid separation part 200 at a bottom thereof.

That is, the guide part 136 is formed of a translucent light-conducting material and communicates with the control unit placed adjacent to the solid-liquid separation part 200 there below by penetrating the expansion rim 131.

The guide part 136 provides a guidance indication that emits light from the control unit to the user. In this case, the guidance indication may be a current operation state of the food disposal apparatus 10, for example, in-operation, operation completion, an error, etc., and indications of the in-operation, the operation completion, and the error may be briefly displayed by illuminated color, flicker, etc. Therefore, the user may quickly recognize a current state of the food disposal apparatus 10 by intuitively recognizing the illuminated color of the guide part 136 which is set.

Such a guide part 136 is placed on an inclined surface of the expansion rim 131, so that when the user looks at the drain 4 of the sink bowl 2 from the top, the user is capable of immediately perceiving the drain 4 of the sink bowl 2 with the naked eyes.

A feedback magnet 135 may be placed below the guide part 136 of the cover guide 130, and the feedback magnet 135 may interlock with a magnet 112 of the inlet cover 111 to provide resistance during rotation of the inlet cover 111.

In this case, a magnetic force of the feedback magnet 135 may be greater than a magnetic force of the magnet 112 of the inlet cover 111.

The inlet cover 111 flows into the side surface of the sink lock 120 of the inlet part 100 and is inserted to be placed on the seating surface 137 of the cover guide 130.

In this case, the inlet cover 111 is seated within the cover guide 130 without a separate coupling structure such as threading, and is capable of adopting a cover for preventing external escape of food during an operation instruction and an operation of the food disposal apparatus 10.

Specifically, the inlet cover 111 may be formed in a disk shape having a predetermined thickness to be rotatable on the cover guide 130, as illustrated in FIG. 6b.

The inlet cover 111 may be implemented with a cover housing 1111 forming a disk and an upper plate 1112 covering an upper portion of the cover housing 1111.

The cover housing 1111 has an internal space and is enabled to be in a cylindrical shape. In this case, a diameter of the cover housing 1111 may be smaller than a diameter of the upper plate 1112.

Inside the cover housing 1111, a predetermined number of magnets 112 may be placed spaced apart from each other.

The magnets 112, which are magnets having the size magnetic force and the same size, are formed to have the same polarity. Such magnets 112 are placed to have the same spacing distance and are enabled to be formed spaced apart from a center point of the cover housing 1111 by a predetermined distance, for example, at an angle of 360/n. The n is defined as the number of magnets 112.

As an example, when six magnets 112 are placed, the magnets 112 may be placed to have a spacing angle of 60 degrees.

The upper plate 1112 may be finished smoothly and flatly to cover the cover housing 1111 and form a top upper surface of the insertion cover 111.

After the inlet cover 111 is seated on the seating surface 137 of the cover guide 130, the inlet cover may be rotated by a predetermined angle or more to command operation start.

The food disposal apparatus 10 of the embodiment does not generate rotation for grinding or dehydrating food input through the inlet part 100 and the solid-liquid separation part 200. Therefore, the inlet cover 111 is not required to be completely sealed to the inlet part 100, and only a covering capability equivalent to preventing discharge of malodors that may occur during operation of the food disposal apparatus 10 by covering the drain 4 is required. Therefore, engaging shapes such as a screw structure, etc., are not essentially required.

However, the inlet cover 111 is seated at the inlet 11 and then rotates, and the rotation of the inlet cover 111 is recognized by detection of a Hall sensor mounted in a control unit of the solid-liquid separation part 200 in conjunction with the magnet 112 mounted on the inlet cover 111 by the rotation.

Through such rotation of the inlet cover 111, seating and an operation start command of the inlet cover 111 are recognizable. That is, the rotation of the inlet cover 111 may be used as an operation switch of the food disposal apparatus 10.

That is, while the inlet cover 111 is seated at the inlet 11 and rotates, the Hall sensor periodically detects the magnet 112 to recognize a rotational operation, and accordingly recognizes the operation start command.

That is, the control unit may distinguish and recognize the operation of seating the inlet cover 111 and the operation start command of the food disposal apparatus 10. Therefore, the seating operation of the inlet cover 111 for preventing odor and the rotational operation for the operation start command of the food disposal apparatus 10 are distinguished, thereby enabling accurate operation start while minimizing user intervention.

Hereinafter, the main body 700 and the solid-liquid separation part 200 of the food disposal apparatus 10 will be described.

FIGS. 7a to 7f are detailed views of a solid-liquid separation part of a first embodiment of the food disposal apparatus of FIG. 1.

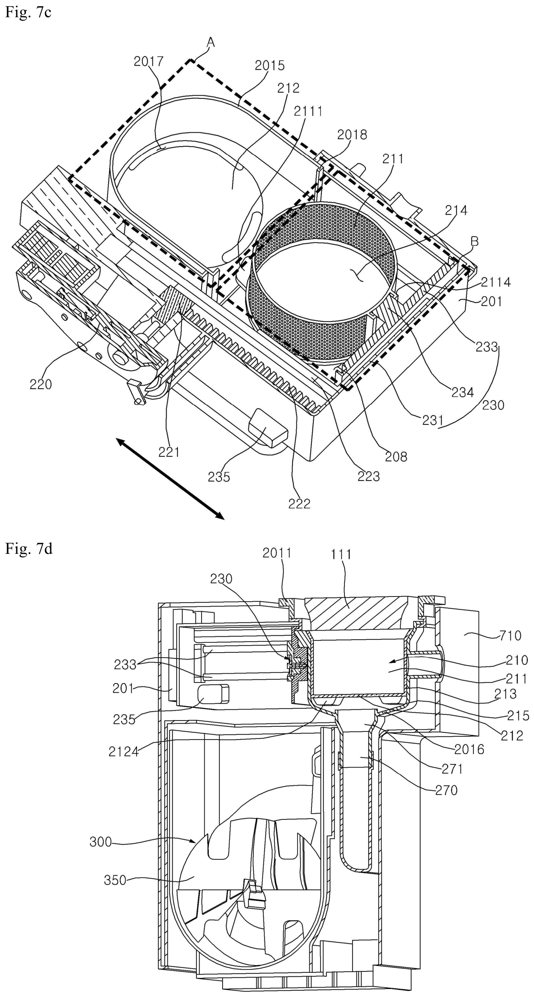

As illustrated in FIGS. 7a and 7d, the solid-liquid separation part 200 is placed within the upper module 710 of the main body 700 of the food disposal apparatus 10 between the inlet part 300 and the decomposition part 300.

The solid-liquid separation part 200 performs a function of filtering a liquid from foot waste introduced into the inlet part 100, i.e., food waste directly introduced from the sink bowl 2 of the sink 1, and transferring only a solid to the decomposition part 300.

The solid-liquid separation part 200 has an inlet 20011 and an outlet 208, and the inlet 2011, and the inlet 2011 is connected to the drain 4 of the sink 1 as described above, and the outlet 208 is placed on a bottom surface of the upper module 710, i.e., a bottom surface of a case 201 of the solid-liquid separation part 200, and communicates with the decomposition part 300.

To this end, the solid-liquid separation part 200 is provided such that at least one region overlaps above the decomposition part 300, and the outlet 208 of the solid-liquid separation part 200 is provided to be located in this overlapping region. As a result, food discharged through the outlet 208 of the solid-liquid separation part 200 falls freely and is transferred to the decomposition part 300.

The inlet 2011 and the outlet 208 of the solid-liquid separation part 200 are not placed in a straight line with respect to a second direction which is a vertical direction.

As an example, the inlet 2011 of the solid-liquid separation part 200 may be positioned biased to a rear from a front and the rear of the food disposal apparatus 10, and the outlet 208 of the solid-liquid separation part 200 may be positioned biased to the front of the food disposal apparatus 10. Therefore, the solid-liquid separation part 200 may horizontally move the introduced food from the rear to the front to be transferred to the decomposition part 300.

The solid-liquid separation part 200 includes the case 201 defining an interior of the upper module 710.

The case 201 of the solid-liquid separation part 200 has a shape in which a length and a depth are greater than a height, and the height is greater than a height of a filter part 210 that primarily receives the input food, the inlet 2011 is provided on a top surface of the case 201, and the outlet 208 is provided on a bottom surface thereof.

In this case, the case 201 may form a hexahedron, and forming the hexahedron means not only having an exact hexahedral shape, but also having a cross-section with a rectangular shape in a partial portion.

The food from the inlet part 100 is transferred to the inlet 2011 of the solid-liquid separation part 200, and the food that has passed through the solid-liquid separation part 200 moves horizontally and is transferred to the decomposition part 300 through the outlet 208 of the solid-liquid separation part 200. The outlet 208 of the solid-liquid separation part 200 is in communication with the inlet of the decomposition part 300 and an entrance 751 of the lower module 750, and may have a matching shape with the entrance 751 of the lower module 750.

An internal space of the solid-liquid separation part 200 defined by the case 201 may be divided into a solid-liquid separation space A and a transfer space B.

The solid-liquid separation space A may be a region located at the rear within the case 201, and is a space between the inlet 2011 and the drain hole 270 that accommodates the filter part 210. The filter part 210 may include a cylindrical side surface 211 and a bottom surface 212, and the side surface 211 includes a filter surface forming a main area of the side surface, an upper rim 2112 extending upwardly from the filter surface, and a lower rim 2113 of the side surface.

The side surface 211 of the filter part 210 is mainly cylindrical and may be implemented as a filter having holes of a predetermined size formed therein, i.e., a strainer, and a liquid flows out through the side surface 211 and is injected into a drain hole connection portion 271 along an inclined surface of a bottom surface 2016 of the solid-liquid separation space A.

The upper rim 2112 is formed as an inclined surface such that a diameter increases upward, while the lower rim 2113 may be formed to extend from the side surface 211 and function as a border.

In this case, the lower rim 2113 may include at least one fixation protrusion 2111 and 2115 that protrudes form a portion of the lower rim 2113, and is fixed to the bottom surface of the solid-liquid separation space A, i.e., the bottom surface 212 of the filter part 210.

The at least one fixing protrusion 2111 and 2115 may be implemented as two consecutive fixing protrusions 2111, but is not limited thereto.

Further, the lower rim 2113 may further include at least one side fixing protrusion 2115 that is separate from the consecutive fixing protrusions 2111 and side-fixes the bottom surface 212 of the filter part 210. The filter part 210 is formed such that the side surface 211 and the bottom surface 212 are separable, and the bottom surface 212 is formed in a closed structure with no hole formed therein.

In this case, the bottom surface 212 has a guide protrusion 2121 that is bent upward and guides the side surface 211 of the filter part 210 at a portion of a border thereof, and a continuous fixing hole corresponding to the continuous fixing protrusion 2111 is formed at a portion between the guide protrusion 2121 and the bottom surface 212.

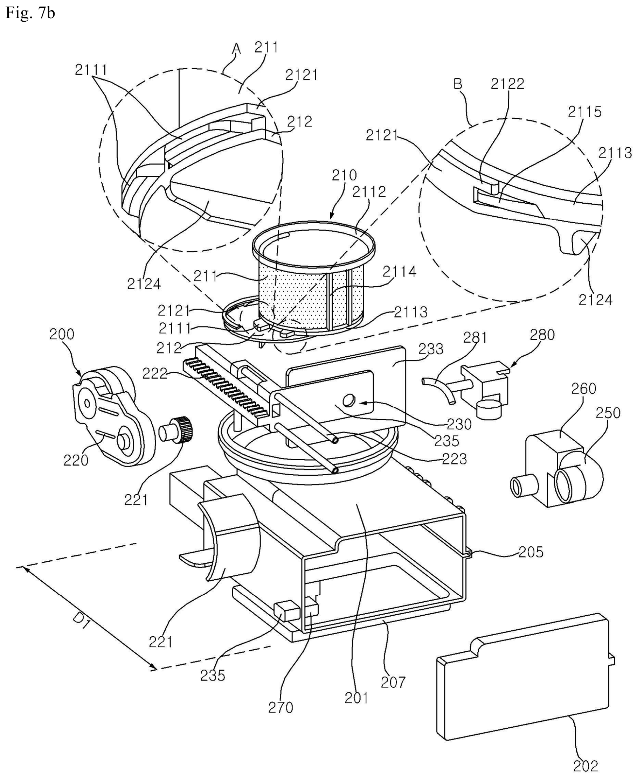

As illustrated in FIG. 7b, the continuous fixing protrusion 2111 of the side surface 211 and the continuous fixing hole of the bottom surface 212 are fitted to each other and the filter part 210 is assembled, and in this case, an upper portion 2122 of an end of the guide protrusion 2121 protrudes in an end direction and is seated on a side fixing protrusion 2115 of the filter part 210, so that when the side surface 211 and the bottom surface 212 of the filter part 210 are slidingly assembled to each other, radial coupling by the continuous fixing protrusion 2111 and the fixing hole (enlarged region A) and circumferential coupling between the side fixing protrusion 2115 and the upper portion 2122 of the end of the guide protrusion 2121 (enlarged region B) are simultaneously achieved to provide strong physical coupling.

The filter part 210 is separated from or coupled to the case 201 of the solid-liquid separation space A in a state where the side surface 211 and the bottom surface 212 are coupled to each other. In this case, the bottom surface 212 is coupled with the case 201 and a portion of the guide protrusion 2121, specifically a region where the guide protrusion 2121 extends outward from a circumference and a lower portion of the side surface 2015 of the case 201, so the bottom surface 212 is enabled to be separated only by physical pressing.

In addition, the bottom surface 212 includes a plurality of support rims 2124 on a back surface thereof.

The plurality of support rims 2124 may serve as supports to maintain the filter part 210 in a horizontal position when the bottom surface 212 of the filter part 210 is seated, corresponding to the inclined surface of the case bottom surface 2016.

The plurality of support rims 2124 may be placed in a radial pattern spaced apart to have equal angles with respect to a center of the back surface of the bottom surface 212, and at least three support rims 2124 are enabled to be implemented.

The plurality of support rims 2124 may maintain the filter part 210 horizontally relative to the inclined surface of the case bottom surface 2016, and since a separation space is formed between the back surface of the filter part 210 and the case bottom surface 2016 by a height of the support rim 2124, the liquid from the food waste may flow into the separation space.

When the filter part 210 is placed in the solid-liquid separation space A, a separation distance is formed between the side surface 211 of the filter part 210 and the case side surface 2015 as illustrated in FIG. 7d, and only a liquid is separated from the food waste through perforations in the side surface 211 of the filter part 210 and flows into the case 201 through a space created by the separation distance.

When the bottom surface 212 of the filter part 210 is positioned in the solid-liquid separation space A, The liquid flowing into the case 201 flows to the case bottom surface 2016 through the separation space 2017 between the case side surface 2015 and the bottom surface 212 of the filter part 210 formed by the extended region of the guide protrusion 2121, and is introduced into the discharge hole connection portion 271.

When the bottom surface 212 of the filter part 210 is not integrated with the bottom surface of the case 201, but is coupled in a separable structure when pressed, allowing separation from the case 201 for washing and drying as needed. Further, by separating the bottom surface 212, washing is possible to prevent bacterial growth on the inclined surface that guides liquid flow to the bottom surface of the case 201, namely the discharge hole 270 connected to the drain 4 of the sink 1.

The filter part 210 is enabled to be removed externally by the user lifting the filter part 210 up from the inlet 11 of the inlet part 100. This has a similar structure to the conventional drain strainer 4 of the sink 1, and by removing the filter part 210 externally for washing and drying, individual management of a space in contact with food is possible.

The case 201 includes a side wall 2015 surrounding the filter part 210, and the side wall 2011 may be formed to have a curved surface in a region corresponding to the filter part 210 as illustrated in FIG. 7c.

A transfer space B is formed in front of the solid-liquid separation space A.

The transfer space B is mainly an empty space, which may have the filter part 210 placed therein by movement of the filter part 210 by the transfer part 400 or may be empty due to retraction of the filter part 210.

The transfer space B has an opened bottom, and the opened bottom serves as an outlet 208 that communicates with the inlet of the decomposition part 300.

The case 201 of the solid-liquid separation part 200 surrounding the transfer space B may have a bent angular shape, and a transfer cover for sealing the front of the case 201 may be separately placed, and when the transfer cover for sealing the front is separately provided and coupled, opening and closing for cleaning and repairing are possible.

The solid-liquid separation part 200 includes, on one side surface of the case 201, a transfer module for moving the filter part 210 between the transfer space B and the solid-liquid separation space A in the horizontal plane.

The transfer module may include a transfer motor 220, a pinion 221 connected to a shaft of the transfer motor 220, and a linear rack 222 which moves forward and backward by the pinion 221.

In addition, the transfer module may further include a guide bar 223 for moving the linear rack 222 and a transfer body 230 that is bent from the linear rack 222 and has a face structure toward the front.

The motor 220 rotates the pinion 221 in one direction in order to move the filter part 210 horizontally from the rear to the front from the solid-liquid separation space A to the transfer space B. Further, the motor may rotate the pinion 221 in an opposite direction if necessary to return the filter body 210 from the transfer space B to the solid-liquid separation space A.

Specifically, the transfer motor 220 may be rotated when the operation start is recognized by rotation of the inlet cover 111 after the food is input into the filter body 210. Alternatively, the transfer motor 220 may be operated by receiving a start signal from the user, and such a start signal from the user is enabled to be received from a user terminal in which an application capable of interlocking with the food disposal apparatus 10 is installed. Rotation driving of the transfer motor 220 may be controlled by the control unit.

The transfer motor 220 may be placed outside the case 201, e.g., outside the side surface of the case 201, but is limited thereto, and may also be placed inside the case 201. When the transfer motor 220 is placed outside the case 201, the shaft of the transfer motor 220 may be connected to the pinion 221 through the side wall of the case 201. The pinion 221 engages with sawteeth of the linear rack to linearly move the linear rack 222 in the forward or backward direction by the shaft of the motor.

In this case, the linear rack 222 may further include a guide bar 223 for carrying out a linear movement in the forward or backward direction along the horizontal plane.

The transfer module includes an extension surface 2221 extending in a vertical (second direction) perpendicular to a longitudinal direction (first direction) of the linear rack 222, and the extension surface 2221 extends in the longitudinal direction like the linear rack 222 and is formed to integrate with the linear rack 222.

At least one holder 2222 for holding the guide bar 223 protrudes at an upper portion and a lower portion of the extension surface 2221. The at least one holder 2222 may be formed in a cylindrical structure penetrated by the guide bar 223 or in a semicircular shape, and when the at least one holder 2222 has the semicircular shape, the at least one holder 2222 is enabled to be placed to be opened in opposite directions to each other. Accordingly, the extension surface 2221 may move linearly without being shaken along the guide bar 223, which is installed to pass a plurality of semicircular holders 2222 at the same time.

When a plurality of guide bars 223 are placed, the holders 2222 may be provided at the upper and lower portions of the extension surface 2221 respectively, and the guide bars 223 are coupled to the holders 2222 at the upper and lower portions respectively, so that the linear rack 222 is enabled to move in a more horizontal and unshaken state.

The guide bar 223 may be, but is not limited thereto, an STS guide having one end, namely a rear end, fixed to the case 201 while maintaining a free front end. Alternatively, the linear rack 222 is enabled to move linearly while controlling horizontality by calculating angles in real time using a horizontal sensor. In this case, a case side surface facing the linear rack 222 may further include a touch sensor 235 that detects a position of a protrusion at a lower portion of the linear rack 222.

In this case, the touch sensor 235 is placed at a position that limits a displacement according to movement of the linear rack 222, and when touch of the protrusion is detected by the touch sensor 235, the control unit C may stop driving of the motor 220. The touch sensor 235 may be placed at both end points of the displacement of the linear rack 222.

The linear rack 222 is placed inside the side wall of the case 201 and moves linearly in the forward or backward direction according to rotation of the pinion 221, and a planar transfer body 230 which is bent from affront border of the linear rack 222 is placed at the front.

The transfer body 230 is a coupling member for coupling with the filter part 210 to move the filter part 210 together during linear movement of the linear rack 222.

The transfer body 230 forms a cover by itself, and the transfer body 230 is enabled to be formed to have the same area and shape as the cross-section of the case 201 perpendicular to a moving direction so as to divide the case 201 of the solid-liquid separation part 200 into front and rear portions.

Accordingly, a rear of the transfer body 230, which is a region where the food is present, and a front of the transfer body 230, which is a region where the food is not present, are separated from each other and sealed.

Such sealing force of the transfer body 230 is enabled to be implemented by a sealing portion 2332 surrounding the border of the transfer body 230.

In addition, the sealing force of the transfer body 230 may prevent liquid from penetrating the front of the transfer body 230 and flowing into the decomposition part 300 during solid-liquid separation of food without a separate cover.

The transfer body 230 may have two bodies that are separably coupled structures, but is not limited thereto and may be formed as one body.

The transfer body 230 is slidably coupled to a fixing portion 2114 formed on the side surface of the filter part 210 facing the transfer space B as illustrated in FIG. 7b, and horizontally moves on the side surface of the filter portion 210 to the transfer space B according to movement of the linear rack 222.

During horizontal movement, only the side surface 211 of the filter part 210 moves while the bottom surface 212 remains in the solid-liquid separation space A, so that only the solids of the solid-liquid separated food retained in the filter part 210 moves to the transfer space B and falls through the lower outlet 208 to the decomposition part 300.

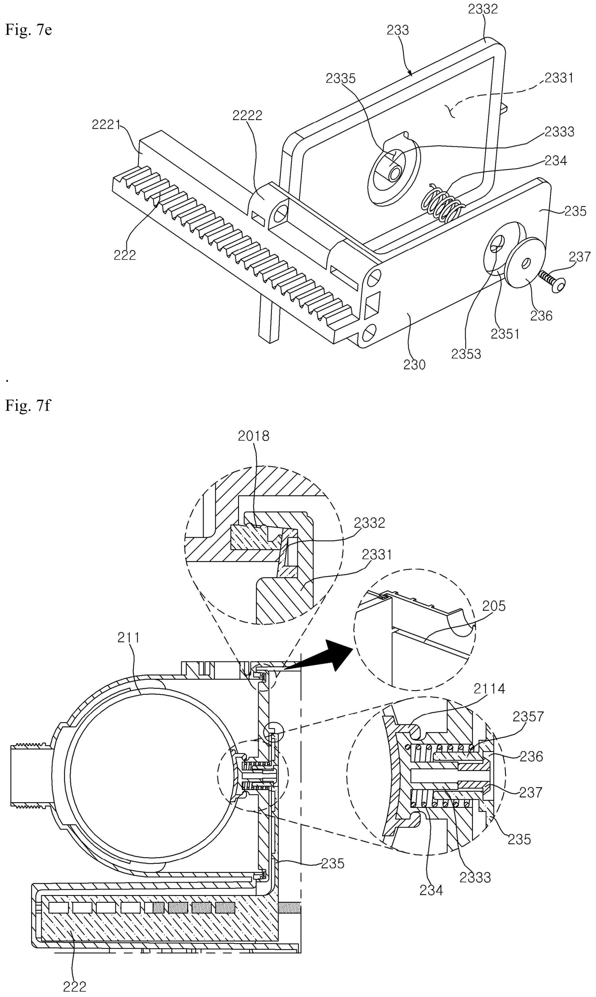

A case where the transfer body 230 is formed as two bodies is described in more detail with reference to FIGS. 7d and 7e.

Referring to FIGS. 7e and 7f, the transfer body 230 is divided into a first body 235 which is bent from the linear rack 222 and integrated therewith, and a second body 233 which is elastically coupled to the first body 235.

The first body 235 may have a smaller area than the second body 233, but is not limited thereto.

The first body 235 is positioned in front, the second body 233 is positioned behind the first body 235, and the second body 233 has a coupling groove 2335 in a central portion thereof. An elastic body coupling protrusion 2333 for elastic coupling protrudes at a center of the coupling groove 2335.

The elastic body coupling protrusion 2333 may include a groove 2337 having threads formed therein.

The first body 235 may have a coupling hole 2353 formed in a region corresponding to the coupling protrusion 2333 of the second body 233, and may further have a first protrusion 2357 extending from the coupling protrusion 2333 and protruding toward a rear surface of the coupling hole 2353.

An elastic body 234 is successively wound from the coupling protrusion 2333 of the second body 233 to the first protrusion 2357 of the first body 235 and flexibly couples the first body 235 and the second body 233.

In addition, the first body 235 and the second body 233 may further include a coupling body 237 that penetrates the coupling hole 2353 from the front of the first body 235 and is threaded to threads within the coupling protrusion 2333 of the second body 233.

Physical coupling of the first body 235 and the second body 233 is achieved by threading via the coupling body 237, but the first body 235 and the second body 233 are coupled not only by the threading, but also by the elastic body 234 surrounding between the coupling protrusion 2333 and the first protrusion 2357, so the second body 233 may be maintained flat without tilting by applying force in an opposite direction against bending that may occur in a specific direction.

More specifically, since the transfer of the transfer module proceeds with force applied only to one side surface of the transfer body 230, i.e., the linear rack 222 is formed only on one side surface to horizontally move the entire transfer body 230, a separation space may occur at a left end portion or a right end portion of the transfer body 230 in some cases.

That is, at the right end portion which is a free end where the linear rack 222 is not connected, the side surface of the case 201 and the transfer body 230 become unsealed and separated from each other.

In order to compensate for such force imbalance, the transfer body 230 is formed as two bodies with the elastic body 234 applied to the connection between the first body 235 and the second body 233 for compensation.

When a thrust force applied to one side of the first body 235 is deflected or deformed, a greater load from the filter part 210 is applied to one side of the second body 233. In this case, a moment is generated in the elastic body 234 at the central portion, which causes a reaction force to be generated on an opposite side, resulting in engagement with a side border of the case 201 at an opposite right end portion.

In this case, a sealing portion 2332 may be formed at the border of the second body 233 to cushion engagement with the border of the case 201, and the border of the second body 233 may be cushioned by the sealing portion 2322 and may engage with the border of the case 201.

Even when the transfer body 230 is in a stationary state in which the transfer body 230 does not transfer the filter part 210 and remains in the solid-liquid separation space A, the border sealing portion 2332 of the transfer body 230 may have a double sealing structure with a sealing member 2018 at the border of the case 201.

That is, in a boundary region between the solid-liquid separation space A and the transfer space B, the side wall of the case 201 of the solid-liquid separation part 200 may further include a case sealing member 2018 that engages with the sealing portion 2332 of the transfer body 230.

By such a double sealing structure, the solid-liquid separation space is be sealed by the transfer body 230 during solid-liquid separation of food to prevent liquid from penetrating the decomposition part 300.

In this case, a peripheral portion of the coupling hole 2353 of the first body 235 may further include a recessed portion 2351 that is concavely recessed, and a buffer member 236 may be placed in the recessed portion 2351, and the coupling body 237 may be formed to penetrate the buffer member 236 and engage with threads within the coupling protrusion 2333 of the second body 233.

In this case, the buffer member 236 may be implemented with an elastic material such as silicone or resin, and may be omitted.

The motor 220 may be provided on the side surface of the case 201 of the solid-liquid separation part 200 where there is sufficient space.

The solid-liquid separation part 200 has a sealed structure through the case 201, and is configured to have a predetermined level of sealing force by closing the inlet cover 111 of the upper inlet 2011.

Therefore, except for the hole of the pinion 221 hole of the motor 220 and the drainage/deodorization module 600 connected to the drain hole of the sink 1 and the outlet 208 connected to the decomposition part 300, the solid-liquid separation part 200 is sealed by the case 201.

Meanwhile, the solid-liquid separation part 200 further includes a separate upper deodorization module 250 for absorbing and discharging odors and water vapor inside the case 201 at an exterior of the case 201. The upper deodorization module is illustrated in detail in FIGS. 12b to 12d.

Referring to FIGS. 12b to 12d, the upper deodorization module 250 includes a deodorization pipe 260 connected to a deodorization hole 261 in a side wall of the transfer space B, and is designed so that one side of the deodorization pipe 260 is connected to the deodorization hole 261, and the other side is connected to a leakage hole 251 in a side wall of the solid-liquid separation space A, and odors are discharged to the decomposition part 300 where negative pressure is established through the deodorization pipe 260. The upper deodorization module 250 is designed such that the leakage hole 251 is positioned lower than the deodorization hole 261 to prevent excessive water from the solid-liquid separation part 200 from flowing through the leakage hole 251, and is enabled to operate such that valves 253 and 254 are closed when water rises through the valves 253 and 254 between the leakage hole 251 and the deodorization hole 261.

Meanwhile, the solid-liquid separation part 200 may further include a nozzle module 731 connected to the water supply pipe of the sink 1 to supply predetermined humidity to the decomposition part 300.

When the solid-liquid separation part 200 includes the nozzle module 731, the nozzle module 731 may penetrate the case 201 above the transfer space B and may be connected to the water supply connection pipe 730. Accordingly, the water supply connection pipe 730 extends from the water supply pipe to the nozzle 731 at the upper portion of the case 201, and the nozzle module 731 penetrates the upper portion of the case 201 to supply water from the upper portion of the transfer space B toward the outlet 208.

Such a nozzle module 731 is controlled by the control unit, and when the humidity is lower than a predetermined value as detected by the humidity sensor in the decomposition part 300, the nozzle module 731 is turned on to spray a predetermined amount of water. However, when the decomposition part 300 functions as a drying part that does not contain microorganisms, the nozzle module 731 may be omitted.

In addition, one side of the solid-liquid separation part 200 may further include a locker 280 for fixing the inlet cover 111 by penetrating the cover guide 130.

The locker 280 is controlled by the control unit as described above, and when the side surface of the filter part 210 is coupled to the bottom surface of the filter part 210 within the solid-liquid separation space A, the locker detects the coupling, and when the cover guide 130 is seated on the side surface of the filter part 210, detects the seating of the cover guide 130, and when the inlet cover 111 is seated on the cover guide 130, detects the seating of the inlet cover 111 and then moves horizontally toward the inlet cover 111. The locker 280 includes a fixing hand 281 that is branched to fix one side surface of the inlet cover 111, and the fixing hand 281 passes through a locker slit 134 of the cover guide 130 to grip and fix the side surface of the inlet cover 111.

By such fixation of the locker 280, when the filter part 210 moves horizontally due to movement of the transfer body 230 below the inlet cover 111, detachment of the inlet cover 111 caused by shaking of food within the filter part 210 may be prevented.

Therefore, even when there is internal vibration, the inlet cover 111 maintains a firmly sealed state, thereby preventing leakage of odor to the outside.

As such, since the inlet 2011 and the outlet 208 of the solid-liquid separation part 200 of the present disclosure are not positioned in the straight line in the vertical direction, the solid-liquid separation part 200 performs filtering of solids and liquids upon input of the food, while only the filtered solids move horizontally and fall into the lower decomposition part 300 to be introduced.

Various modified examples may exist for the basic module and operation of such solid-liquid separation part 200, which are not limited to FIG. 7.

In addition, the positions of the motor 220, the locker 280, and the upper deodorization module 250 are merely one example of the solid-liquid separation part 200 of the first embodiment, and various modified examples are possible.

The structure is greatly simplified by such a solid-liquid separation part 200 that horizontally moves only a portion of the filter part 210, for example, only the side surface 211, from the rear to the front, and isolation of the decomposition part 300 is possible.

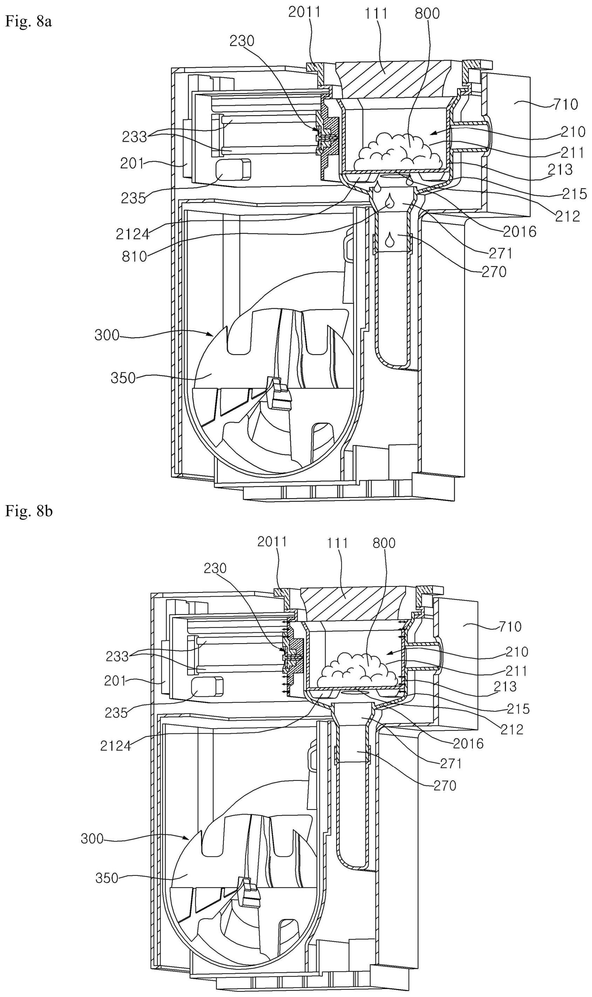

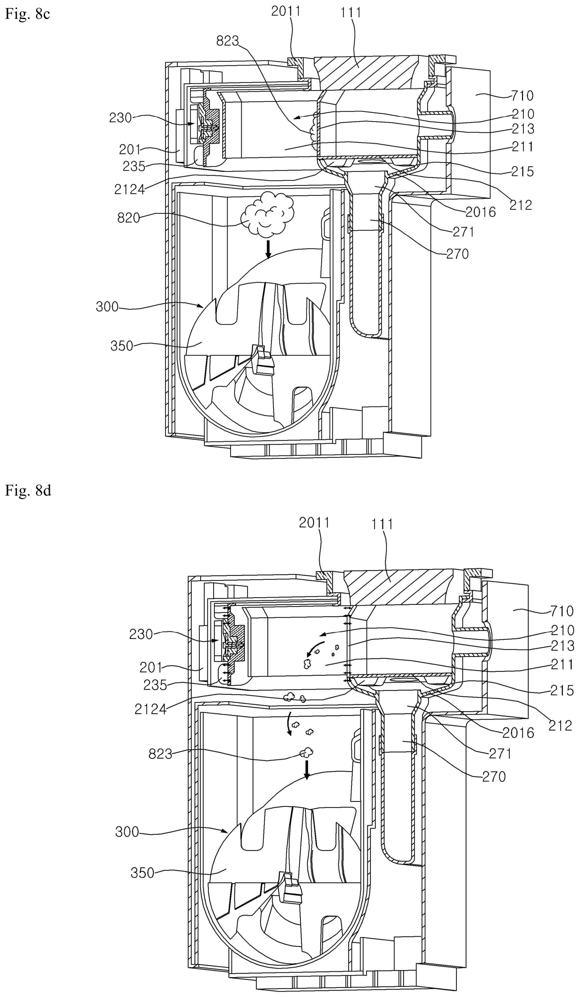

Hereinafter, the operation of the solid-liquid separation part 200 will be described with reference to FIG. 8.

Referring to FIG. 8a, in the food disposal apparatus 10 of the embodiment, which is built into the internal space 3 of the sink 1, when food waste is generated, food 800 is input into the inlet part 100 through the drain 4 of the sink bowl 2 of the sink 1.

When the food 800 is input into the filter part 210 through the inlet 100, liquid 810 in the food flows by gravity through perforations of the filter part 210 and through a hole between the bottom surface 212 of the filter part 210 and the case 201 of the solid-liquid separation part 200 into a first pipe 650 of the drainage/deodorization module 600. The liquid is discharged through the first pipe 650 to the drain of the sink 1, and only solids 820 remain in the filter part 210.

Referring to FIG. 8b, in this case, the filter part 210 may be vibrated to effectively separate the liquid 810 in the food.

Specifically, the filter part 210 may be vibrated in a left-right or forward-backward direction. Preferably, since the filter part 210 moves in the forward-backward direction, the filter part 210 is vibrated in the forward-backward direction. A vibration with of the filter part 210 is preferably 2% to 10% of the diameter of the filter part 210.

More specifically, the motor 220 of the solid-liquid separation part 200 is driven alternately in the forward-backward direction, and the linear rack 222 reciprocates forward and backward on the horizontal plane by rotation of the pinion 221. Accordingly, the connected transfer body 230 reciprocates the side surface 211 of the filter part 210 forward and backward.

The vibration of the filter part 210 is delivered to the food positioned inside the filter part 210, and by this vibration, the liquid in the food falls downward.

Referring to FIG. 8c, when the user rotates the inlet cover 111 at a predetermined angle or more while placing the inlet cover 111 on the cover guide 130, the control unit C of the food disposal apparatus 10 instructs a transfer operation of the solid-liquid separation part 200.

The solid-liquid separation part 200 horizontally moves only the solid 820 from which the liquid is separated from the food which moves from the inlet part 100 forward, and drops the solid 820 to the decomposition part 300 at the bottom thereof.

Specifically, while the motor 220 of the solid-liquid separation part 200 is driven, the linear rack 222 linearly moves forward on the horizontal plane by rotation of the pinion 221. As a result, the connected transfer body 230 moves the side surface 211 of the filter part 210 forward. In this case, since the bottom surface 212 of the filter part 210 remains in the solid-liquid separation space A, only the side surface 211 of the filter part 210 is present in the transfer space B, and the solid 820 in the filter part 210 falls down to the decomposition part 300 there below by gravity.

Referring to FIG. 8d, the solid-liquid separation part 200 may vibrate the filter part 210 to drop solids that are attached to the filter part 210 and are not dropped into the decomposition part 300.

Specifically, the filter part 210 may be vibrated in the left-right or forward-backward direction. Preferably, since the filter part 210 moves in the forward-backward direction, the filter part 210 is vibrated in the forward-backward direction. The vibration with of the filter part 210 is preferably 2% to 10% of the diameter of the filter part 210.

More specifically, the motor 220 of the solid-liquid separation part 200 is driven alternately in the forward-backward direction, and the linear rack 222 reciprocates forward and backward on the horizontal plane by rotation of the pinion 221. Accordingly, the connected transfer body 230 reciprocates the side surface 211 of the filter part 210 forward and backward.

The vibration of the filter part 210 is transmitted to the solids 823 attached to the side surface 211 of the filter part 210, and by this vibration, the solids 823 attached to the side surface 211 of the filter part 210 fall into the decomposition part 300.

After a predetermined time elapses, the motor 220 rotates in the opposite direction to move the filter part 210 back to the solid-liquid separation space A.

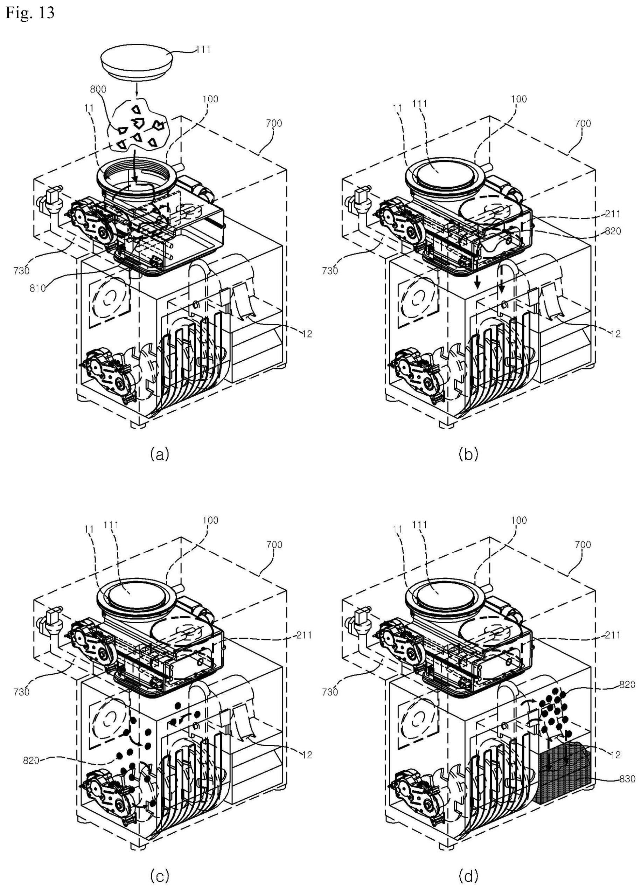

Meanwhile, the food solids 820 that fall into the decomposition part 300 are mixed as the stirring member 350 rotates by rotation of the motor 330 of the decomposition part 300, and here, the microorganisms accommodated therein, the previous food being composted, and the currently input food are all mixed by stirring. The food disposal procedure will be described in detail with reference to FIG. 13.

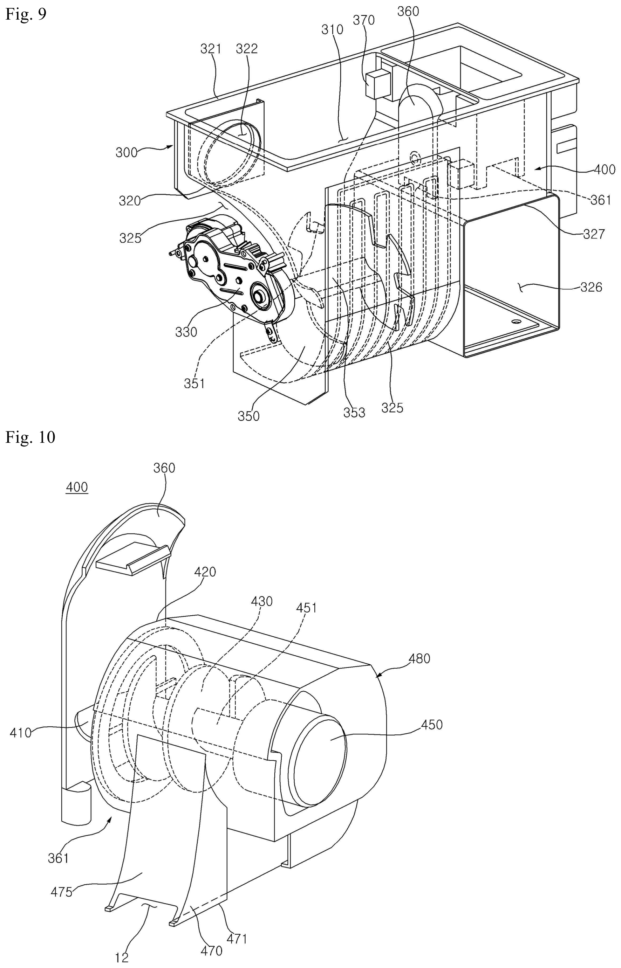

Hereinafter, the detachable lower module 750 of the embodiment will be described with reference to FIGS. 9 to 12.

The lower module 750 that accommodates all of the decomposition part 300, the transfer part 400, and the collection part 500 is packaged as an individual module separable from the main body 700. The lower module 750 accommodates the internal case 320 of each module within the lower case 751, so that each functional module has a dual case structure.

The case 751 of the lower module 750 may be implemented with the same material as the main body 700 as illustrated in FIGS. 1 and 2, and is formed in a rectangular parallelepiped shape to be insertable into the main body 700.

FIG. 9 is a perspective view illustrating an interior of the lower module 750 of the food disposal apparatus 10 of FIG. 1.

The internal case 320 may define the positions of the decomposition part 300, the transfer part 400, and the collection part 500 and may be provided as a single injection-molding form.

In this case, the transfer part 400 and the collection part 500 may have individual cases placed within the internal case 320, but for the decomposition part 300, the internal case 320 itself may define the space of the decomposition part 300.

That is, the decomposition part 300 is defined as a space for stirring microorganisms and food in an accommodation state. The decomposition part 300 is a space 310 on one side of the internal case 320 that remains mostly empty and occupies 1/2 to 2/3 of a volume of the lower module 750.

The decomposition part 300 may be placed biased to a lower left side on the front surface of the food disposal apparatus 10, and the collection part 500 and the transfer part 400 are positioned overlapping toward the lower right side.

Accordingly, the space 310 of the decomposition part 300 maintains a deep concave shape so as to occupy an entire overlapping length of the collection part 500 and the transfer part 400, and the internal case 320 has a partition wall 360 positioned to separate the collection part 500 and the transfer part 400 from the decomposition part 300.

The decomposition part 300 within the lower module 750 stirs solid food from which liquid is removed, which is delivered to the decomposition part 300 with microorganisms. The stirring of the food and the microorganisms increases decomposition efficiency. An stirring shaft 331 rotates within the decomposition part 300, and an stirring member 350 is connected to the stirring shaft 331 and rotates together with the stirring shaft 331. The stirring member 350 may be of a screw type that spirally surrounds the stirring shaft 331 as an axis.

The stirring shaft 331 may be a horizontal rotary shaft which is placed at a lower portion of the decomposition part 300 and extends across left and right directions, and the stirring member 350 may be branched in a radial direction perpendicular to the stirring shaft 331. The stirring member 350 may be formed as an integral screw type and may protrude at different heights with respect to the stirring shaft 331.

Therefore, the stirring member 350 is formed such that when a portion protruding farthest from the stirring shaft is defined as a peak, another peak is positioned on an opposite side at 180 degrees, and a height may be formed to decrease between the peaks, but is not limited thereto and may be formed as a screw type having the same length.

Further, the stirring member 350 includes a concave portion 351 at least in part, and the concave portion is irregularly placed to generate turbulence for smoothly mixing small particle compost produced by decomposition.

The internal case 320 of the decomposition part 300 may be formed such that the lower left side is concavely recessed to have a structure in which a cross-sectional area narrows toward the bottom. In particular, the lower portion that is concavely recessed in the internal case 320 of the decomposition part 300 may be formed such that the bottom surface has a curved surface to prevent food or debris from remaining at corners.

In addition, the bottom surface having the curved surface is formed with the curved surface following a trajectory of the stirring member 350, so that a centrifugal force generated by rotation of the stirring member 350 uniformly affects each space in the lower portion, thereby enabling uniform stirring of food and microorganisms in the lower portion.

One side of the stirring shaft 331 having a horizontal rotation axis in a first direction that is a left-right direction is rotatably fixed to an outer wall of the decomposition part 300, and the other side may be rotatably fixed to an inner wall facing the outer wall.

The stirring shaft 331 may receive driving force from the motor 330 provided in the food disposal apparatus 10, and the motor 330 is placed outside a left wall and is positioned in a space 352 between the case 751 of the lower module 750 and the internal case 320 by a concave space 352 in a lower region of the case 320. The driving force of the motor 330 may be transmitted through the stirring shaft and a fixed gear.

The decomposition part 300 may be provided with a heating means 328 for heating an internal space. The heating means 328 may be, for example, a heating wire heater. The heating means 328 may be provided on an outer surface of the case 320 of the decomposition part 300 so that heat may be indirectly transmitted to the internal space of the decomposition part 300 through the case 320 of the decomposition part 300. The case 320 of the decomposition part 300 includes a metallic plate 1112 having high thermal conductivity to enable efficient heat transmission. To this end, the case 320 of the decomposition part 300 may have some surfaces made of different materials of metal and non-metal as needed.

The internal space 310 of the decomposition part 300 is heated so that microorganisms may reach an appropriate temperature for decomposing food, and also allows sufficient moisture of the food to be evaporated or vaporized to facilitate disposal.

When the upper portion of the decomposition part 300 is opened, the opened upper portion of the decomposition part 300 is aligned with the outlet 208 of the case 201 of the solid-liquid separation part 200.

In this case, the upper portion of the decomposition part 300 may be larger than the outlet 208 of the solid-liquid separation part 200. Since the lower module 750 may be packaged in a separate case 751 and may be independently separated, a user's hand may enter the internal space 310 through an opening of the upper portion of the decomposition part 300. Therefore, cleaning of the internal space 310 of the decomposition part 300, removal of stuck or adhered food, etc., may be facilitated, and if foreign matters (for example, spoons, chopsticks, bottle caps, etc.,) are introduced into the lower space 310, the foreign matters may be simply removed.

The decomposition part 300 is formed with a deodorization port 322 for connection with the rear drainage/deodorization module 600. A rear surface of the case 320 of the decomposition part 300 may be provided with the deodorization port 322 that may be aligned with a deodorization fan placed in the main body 700 at an upper portion.

The decomposition part 300 does not have a separate drainage structure and decomposes the dehydrated solid food and discharges only vaporized odors or water vapor through deodorization. Therefore, the decomposition part 300 does not have any structure connected to the outside except for the deodorization port 322.

In some cases, where a separate drainage structure is required, the drawer-type lower module 750 may include a module for connecting a drainage structure to connect a drain channel to a drain pipe of the sink 1, but alternatively, may further include a water tank that separately collects and discharges liquid.

In the decomposition part 300, the delivered food and food being decomposed by microorganisms are mixed and accumulated. Among the accumulated food, food of which decomposition is completed becomes compost with very small particles and a reduced weight.

Such compost is delivered to the collection part 500 through the transfer part 400 located at the top of the decomposition part 300 while moving farther along a larger trajectory due to the rotation of the stirring member 350 caused by a weight difference from newly introduced food.

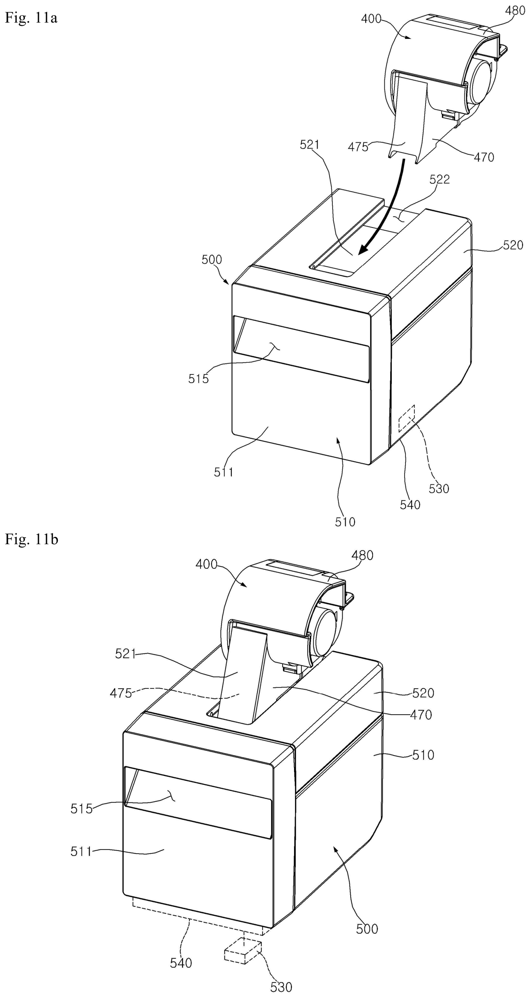

Hereinafter, the transfer part 400 and the collection part 500 will be described with reference to FIGS. 10 and 11.

FIG. 10 is a perspective view illustrating an interior of a transfer part 400 of the lower module 750 of the food disposal apparatus 10 of FIG. 1, and FIGS. 11a and 11b are state diagrams illustrating coupling of the transfer part 400 and the collection part 500.

First, referring to FIG. 10, the transfer part 400 may implement a transfer function through a transfer screw 430 and a decomposition tank propeller 410.

The transfer part 400 is present on one side of the decomposition part 300, for example, on a right side, and is positioned above the collection part 500.

Due to a height difference between the transfer part 400 and the stirring member 350 of the decomposition part 300, only compost having a small weight may selectively reach the transfer part 400. That is, only compost that forms a large trajectory up to the height due to the weight difference and undergoes motion by stirring is introduced into the transfer part 400, and the transfer part 400 is implemented such that the introduced compost moves to the collection part 500.

Specifically, the transfer part 400 has a partition wall 360, and the partition wall 360 has an inlet 361 with an open bottom, so that the decomposition part 300 and the transfer part 400 are connected through the inlet 361.

The partition wall 360 may be formed so that only compost may pass through the inlet 361, and as the food is composted, the compost may have a greatest displacement due to the weight difference and is capable of reaching the inlet 361. When the compost reaching the inlet 361 of the partition wall 360 is introduced into the inlet 361, the decomposition chamber propeller 410 for transferring the compost inward is placed inside the partition wall 360.

That is, the decomposition tank propeller 410 is disposed close to the partition wall 360 and serves to sweep and clear a region in front of the inlet 361.

The transfer screw 430 transfers the compost introduced into the transfer space 501 to the collection part 500. The transfer screw 430 may be provided with a rotation shaft 451 in a transfer direction of the compost, and as a helical blade 511 protruding from the rotation shaft 451 rotates, the food may be pushed toward the collection part 500 or pushed and moved in an opposite direction.

The motor 450 rotates the transfer screw 430 in one direction so that the compost moves from the decomposition part 300 region to the collection part 500 region.

In this case, when a signal indicating that a collection container 510 provided in the collection part 500 is full is received, the compost may be moved back from the collection part 500 region to the decomposition part 300 region, or the motor 450 may be stopped. The rotational driving of the motor 450 may be controlled by the control unit C.

The transfer part 400 may include a screen 420 covering the transfer screw 430, and the screen 420 may prevent transferred compost from escaping to the outside. The screen 420 may be formed in a cylindrical shape extending from a partition wall and accommodates the transfer screw 430 and the motor 450. The screen 420 surrounds an outer circumferential surface of the transfer screw 430 and moves the compost from left to right, and discharges the compost toward the outlet 12 to fall into the collection part 500.

A bracket 470 of the transfer part 400 may protrude from a lower portion of the screen 420 toward the collection part 500, and fix the transfer part 400 to the cover 520 of the collection part 500. The bracket 470 of the transfer part 400 has an outlet 12 at a bottom thereof, and a border of the outlet 12 forms a rail 471 that slidably engages with a hinged cover 521 of the collection part 500 to enable fixation and communication.

Rotation of the transfer screw 430 may be implemented by driving the motor 450. The driving force of the motor 450 may be transmitted through the transfer screw 430 and the fixed shaft 451. In this case, the shaft 451 is fixed together with the propeller 410 so that the transfer screw 430 and the propeller 410 may be simultaneously rotated by one motor 450. In this case, when the transfer screw 430 and the propeller 410 have different rotational speeds, the rotational speeds may be controlled through separate gears. As described above, a space occupied by the motor 450 is minimized to contribute to device miniaturization, and power consumption may also be minimized.

As such, the transfer part 400 is present only above the collection part 500, and only compost, which consists of small and light particles, is selectively introduced into the transfer part 400 through the inlet 361, thereby having a structure that fundamentally prevents uncomposted food from being introduced into the transfer part 400.

Therefore, cases where food remains on the transfer part 400 for a long time or debris adheres to cause odors become very exceptional cases.

Further, by holding separate motors 330 and 450 for the decomposition part 300 and the transfer part 400, the stirring of the decomposition part 300 and the transfer of the transfer part 400 may be performed by independent control. As an example, when the stirring shaft 331 rotates only in one direction, food in one side region may be accumulated, preventing the food waste from being stirred evenly. Therefore, in this case, the stirring shaft 331 may rotate periodically in the opposite direction, while the transfer screw 430 may rotate continuously to move food from the decomposition part 300 toward the collection part 500.

Further, stirring may be carried out continuously even when transferring from the transfer part 400 is interrupted due to a capacity of the collection part 500. For example, the stirring of the food may continue to be performed even while the collection container 520 is separated from a seating space of the collection part 500 for disposal of decomposed food.

The driving speed and the driving direction of the motor 450 may be controlled based on a control signal from the control unit C such as a processor. A specific power transmission structure is not limited thereto and may be configured in consideration of torque, rotational speed, spatial placement, and the like.

The collection part 500 may be positioned in a lower right portion within the internal case 320 of the lower module 750 in the rectangular parallelepiped shape as illustrated in FIGS. 11a and 11b.

The collection part 500 is inserted into a collection space 326 of the internal case 320 of the lower module 750.

The collection part 500 is a single module that is enabled to be individually assembled to and disassembled from the main body 700, and is also enabled to be assembled to and disassembled from the lower module 750.

That is, the collection part 500 is a module that is inserted into the collection space 326 in a state similar to an insertable waste container.

The collection part 500 is constituted by the cover 520 and the collection container 510 of the collection part 500.

The hinged cover 521 is placed in the cover 520 of the collection part 500.

The hinged cover 521 is opened when being coupled to the transfer part 400, and communicates an internal space of the collection container 510 with the outlet 12 of the transfer part 400.

The hinged cover 521 is closed when the user separates the collection part 500 from the collection space 326 and removes the collection part 500, and when the user reinstalls the collection part 500 in the food disposal apparatus 10, the hinged cover 521 is opened while riding up along an inclined surface 475 of the bracket 470 of the transfer part 400. To this end, the hinged cover 521 is hinge-coupled to a front side.

Therefore, when the collection part 500 is removed, the user may be prevented from viewing the compost, and the odor of the compost may be prevented from escaping.

The collection container 510 has a concave shape to provide an internal collection space, and may have a stepped structure to allow for the use of a vinyl cover.

When a predetermined amount is accumulated in the collection part 500, a sensor 530 is included that may measure the amount of compost in the collection part 500 so that the user may collect and dispose the predetermined amount of compost.

The sensor 530 of the collection part 500 may be a weight sensor, and a weight plate 540 is formed on a bottom surface of the collection container 510, and a weight of the compost is enabled to be detected through a load cell beneath the weight plate 540 and transmitted to the control unit C.

The sensor 530 of the collection part 500 may alternatively be a water level sensor placed inside the collection space, and various sensors such as an ultrasonic sensor, a laser sensor, an image sensor, etc., may be applied as the water level sensor.

As such, the coupling and communication between the collection part 500 and the transfer part 400 are achieved by sliding coupling between the outlet 12 of the transfer part 400 and the hinged cover 521 of the cover 520 of the collection part 500, thereby enabling sealing to prevent user discomfort from internal compost when removing the collection part 500, and allowing easy fastening and separation of the two modules.

Meanwhile, the food disposal apparatus 10 of the embodiment further includes the drainage/deodorization module 600 in a separation space between the main body 700 and the lower module 750, i.e., in a rear space.

FIGS. 12a to 12d are schematic configuration diagrams illustrating a drainage deodorization module 600 of the food disposal apparatus 10 of FIG. 1.

The lower module 750 has an internal space defined by the case 751 of a rectangular parallelepiped lower module 750 having a smaller depth than the main body 700.

Due to such a depth difference, a separation space is present between the main body 700 and the case 751 of the lower module 750 at the rear of the lower module 750.

Such a separation space is positioned biased to the lower rear portion with respect to the entirety of the main body 700 of the food disposal apparatus 10. An exhaust fan 620 is formed on a rear surface of the separation space, that is, a rear surface of the body 700. Further, a drain pipe connection portion connected to the drain pipe of the sink 1 is formed on a bottom surface of the separation space, that is, a bottom surface of the body 700.

Negative pressure is formed inside the food disposal apparatus 10 by the exhaust fan 620, and odors and water vapor inside are discharged to the drain pipe of the sink 1 through a deodorization duct 610 connected to the exhaust fan 620.

The deodorization duct 610 is a spiral (helical) duct 610, and has one side having a region facing the exhaust fan 620, which is coupled to a ventilation port 322 formed on the rear surface of the case of the lower module 750, and the other side connected to the drain deodorization pipes 650 and 660.

The connection between the deodorization duct 610 and the drain deodorization pipes 650 and 660 may be formed through a coupling part 630, which may be implemented with an O-ring, etc.

The drain deodorization pipes 650 and 660 are formed as pipes having a plurality of bent portions connecting a first inlet connected to the drain pipe 270 of the solid-liquid separation part 200, a second inlet connected to the deodorization duct 610, and an outlet connected to an external drain pipe of the sink 1.

The drain deodorization pipes 650 and 660 form an s-shaped trap between the first inlet and the outlet, which includes a first pipe 650 for forming a path of washing water that flows down from the strainer from the first inlet, allowing the filtered liquid from the solid-liquid separation part 200 to flow into the external drain pipe. The s-shaped trap always retains water therein, thereby preventing odor backflow from the drain 4.

Meanwhile, the drain deodorization pipes 650 and 660 further include a second pipe 660 having at least one bent portion formed between the second inlet and the outlet.

In this case, a backflow prevention cover 670 is formed between the second pipe 660 and the outlet to prevent liquid from flowing backward from the first pipe 650 into the second pipe 660.

The backflow prevention cover 670 is provided to prevent an accident in which all microorganisms in the decomposition part 300 are killed when liquid flows back through the second pipe 660 and is injected into the decomposition part 300. A check valve is applicable as the backflow prevention cover 670.

The check valve may be configured to open the second pipe 660 and connect the second pipe 660 to the outlet when odors and water vapor are discharged through the second pipe 660, and to block the second pipe 660 by reverse gravity when liquid flows back through the outlet or the first pipe 650. That is, the check valve may be opened and closed by gravity. As an example for providing elasticity to the check valve, the check valve may be made of a silicone material with an upper side of the check valve which may fixed to an upper side of the second pipe 660. A fixed portion of the check valve may perform the same function as hinge fastening.

As such, two paths 650 and 660 are integrated and formed between the case of the main body 700 and the case 751 of the lower module 750, which is advantageous for space utilization. Further, by discharging both wastewater and odors through the drain of the sink 1 without forming a separate odor discharge path, odor discharge to the outside may be prevented, and a separate filter structure for minimizing odor discharge to the outside is not required. Therefore, a product may be simplified and cost may be reduced.

Further, when the lower module 750 and the main body 700 are coupled, coupling with the deodorization duct 610 is induced, thereby achieving fitting coupling without a separate physical coupling structure, and for this purpose, a sealing portion may be formed between the ventilation port of the lower module 750 and the deodorization duct 610.

In this case, the odor and water vapor from the solid-liquid separation space A are sucked into the transfer space B of the solid-liquid separation part 200 by the upper deodorization module 250 described above, and there is a structure in which the odor and moisture are introduced into the decomposition part 300 through the outlet 208 of the solid-liquid separation part 200. Therefore, the odor and water vapor from both the upper module 710 and the lower module 750 are all discharged to the second pipe 660 through the deodorization duct 610 via a rear opening portion 322 within the decomposition part 300.

The ventilation port of the lower module 750 is aligned to communicate with the rear opening 322 of the case of the decomposition part 300 to form negative pressure in all of the inside of the decomposition part 300 and the internal space of the solid-liquid separation part 200 through the opening at the upper portion of the decomposition part 300, and the transfer part 400 and the collection part 500 connected to the transfer part 400, thereby creating an air flow that allows both odors and water vapor to be discharged through the opening 322.

Further, a guide seal is formed between the exhaust fan 620 and the deodorization duct 610, and the guide seal assists the deodorization duct 610 of the lower module 750 to properly engage with the exhaust fan 620 of the main body 700, while forming a sealing structure that prevents odors from the decomposition part 300 from leaking to the outside.

The food disposal apparatus 10 of this embodiment includes a control unit C for recognizing a start command by rotation of the inlet cover 111 and controlling each module.

The control unit C may be implemented as a processor or microcomputer, and communicates with various sensors and the display part 14 in each module via wired or wireless communication to control the operation of each module accordingly.

Hereinafter, the operation of the food disposal apparatus 10 of the embodiment will be described with reference to FIGS. 13a to 13d.

FIGS. 13a to 13d are flowcharts illustrating the operation of the food disposal apparatus 10 of FIG. 1.

First, as illustrated in FIG. 13a, in the food disposal apparatus 10 of the embodiment, which is built into the internal space 3 of the sink 1, when food waste is generated, food 800 is input into the inlet part 100 through the drain 4 of the sink bowl 2 of the sink 1.

When the food 800 is input into the filter part 210 through the inlet 100, liquid 810 in the food flows by gravity through perforations of the filter part 210 and through a hole between the bottom surface 212 of the filter part 210 and the case 201 of the solid-liquid separation part 200 into a first pipe 650 of the drainage/deodorization module 600. The liquid is discharged through the first pipe 650 to the drain of the sink 1, and only solids 820 remain in the filter part 210.

As illustrated in FIG. 13b, when the user rotates the inlet cover 111 at a predetermined angle or more while placing the inlet cover 111 on the cover guide 130, the control unit C of the food disposal apparatus 10 instructs a transfer operation of the solid-liquid separation part 200.

The solid-liquid separation part 200 horizontally moves only the solid 820 from which the liquid is separated from the food which moves from the inlet part 100 forward, and drops the solids 820 to the decomposition part 300 at the bottom thereof.

That is, while the motor 220 of the solid-liquid separation part 200 is driven, the linear rack 222 linearly moves forward on the horizontal plane by rotation of the pinion 221. As a result, the connected transfer body 230 moves the side surface 211 of the filter part 210 forward. In this case, since the bottom surface 212 of the filter part 210 remains in the solid-liquid separation space A, only the side surface 211 of the filter part 210 is present in the transfer space B, and the solid 820 in the filter part 210 falls down to the decomposition part 300 therebelow by gravity.

After a predetermined time elapses, the motor 220 rotates in the opposite direction to move the filter part 210 back to the solid-liquid separation space A.

Meanwhile, the food solids 820 that fall into the decomposition part 300 are mixed as the stirring member 350 rotates by rotation of the motor 330 of the decomposition part 300, and here, the microorganisms accommodated therein, the previous food being composted, and the currently input food are all mixed by stirring.

Through such continuous mixing and maintenance of a predetermined temperature by the heating wire member 328, a microbial fermentation process proceeds and the food is fermented and decomposed into compost 821.

Such decomposition is a process of converting an organic material into an inorganic material, which may be expressed as composting.

The decomposed compost 821 has smaller and lighter particles than the input food. Therefore, during stirring by the motor 330 of the decomposition part 300, the movement of food occurs from bottom to top, laterally in a wide upper space, and from top to bottom, utilizing an entire space of the decomposition part 300. Such a large trajectory is achieved by low-speed rotation of the stirring member 350, an integral screw form of the stirring member 350, and irregular recessed portions 351.

As illustrated in FIG. 13d, the decomposed compost has a larger trajectory during stirring due to small and light particle characteristics, and accordingly may move to the transfer part 400 through the inlet 361 located below the partition wall 360 placed at an upper right portion.

When the motor 450 of the transfer part 400 is driven to rotate the transfer screw 430 and move the compost introduced through the inlet 361 to the right side, the compost flows into the collection part 500 at the bottom through the outlet 12 formed on the right side.

By the control unit C controlling the driving of the motor of each module, the motor of each module is enabled to rotate the shaft in a predetermined direction and speed according to characteristics, thereby enabling optimal driving.

As an example, when a water level sensor 370 is placed inside the decomposition part 300 and the water level sensor 370 detects compost material 821 forming a trajectory larger than a predetermined height, the motor of the transfer part 400 is operated to transfer the compost 821 by the transfer part 400.

Therefore, simple independent control is possible without a complex gear connection structure for rotating a plurality of modules with a single motor.

Further, when the weight of the compost 830 within the collection part 500 exceeds a predetermined value, the control unit C may receive a detection value from the weight sensor 530 and accordingly provide a discharge alarm of the collection part 500 to the display part 14 or an interlocked user terminal.

Such an alarm allows the user to separate only the collection part 500 from the case 751 of the lower module 750 and empty the internal compost 830.

As described above, the food disposal apparatus 10 of the embodiment is built into the sink 1 and communicates with the drain 4 of the sink 1, and is connected to the water supply pipe and the drain pipe of the sink 1 to receive water and discharge liquid and odors from food to the drain pipe. Accordingly, an output from the food disposal apparatus 10 is limited to the compost in the collection part 500, and the user is capable of using the food disposal apparatus 10 without various modules for ventilation and deodorization for separate exhaust by emptying only the compost according to the alarm.

The food disposal apparatus 10 of the embodiment is configured as separate modules comprising the upper module 710 that houses the inlet part 100 and the solid-liquid separation part 200, and the lower module 750 that houses the decomposition part 300, the transfer part 400, and the collection part 500, as described above. The lower module 750 is packaged in a separate case 751 and is configured to be coupled to and detached from the main body 700 as a drawer-type.

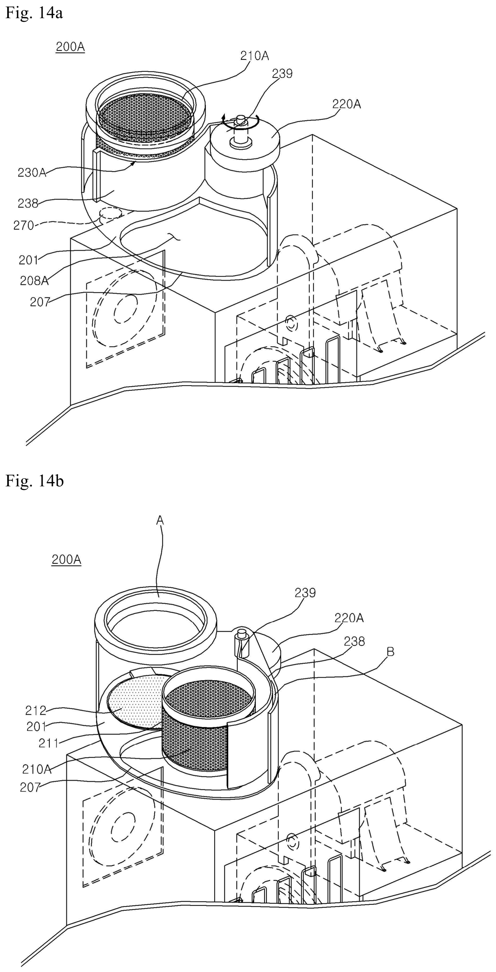

Hereinafter, various embodiments of the solid-liquid separation part 200 applicable to the present disclosure will be described with reference to FIGS. 14 to 19.

The solid-liquid separation part 200 is inserted into the upper module 710 to be compatible with other modules described in FIGS. 1 to 12.

FIGS. 14a and 14b are state diagrams of a solid-liquid separation part 200 according to a second embodiment.

Referring to FIGS. 14a and 14b, the solid-liquid separation part 200A according to the second embodiment of the present disclosure is a module for separating solids and liquids of food flowing through an inlet 2011 of the solid-liquid separation part 200A and transferring the solids and the liquids to the decomposition part 300 as described above.

Referring to FIG. 14a, the solid-liquid separation part 200A of the second embodiment is divided into a solid-liquid separation space A where solid-liquid separation is performed and a transfer space B where transfer of solids is performed, and while solid-liquid separation is performed in the solid-liquid separation space A, the transfer space B is sealed from the food and is structured to prevent the liquid of the food from flowing therein.

In the solid-liquid separation part 200A of FIG. 14 above, an inlet formed at a rear of an upper surface of a case of the solid-liquid separation part 200A and is connected to the drain 4 of the sink 1 as described above, and an outlet 208A may be placed on a bottom surface of the upper module 710, i.e., a front of a bottom surface of a case 201 of the solid-liquid separation part 200A, and may communicate with the decomposition part 300.

To this end, the solid-liquid separation part 200A is provided such that at least one region overlaps above the decomposition part 300, and the outlet 208A of the solid-liquid separation part 200A is provided to be located in this overlapping region. As a result, food discharged through the outlet 208A of the solid-liquid separation part 200A falls freely and is transferred to the decomposition part 300. Therefore, the solid-liquid separation part 200A rotatably moves the introduced food from the rear to the front on the horizontal plane, and transfers the food to the decomposition part 300.

The case 201 of the solid-liquid separation part 200A may be formed along a movement trajectory of a filter part 210A as illustrated in FIG. 14a. Specifically, the case 201 is formed to accommodate both the solid-liquid separation space A and the transfer space B. As an example, the case 201 may be formed to surround the filter part 210A inserted into the inlet 2011, and the filter part 210A is separable into the side surface 211 and the bottom surface 212 as described above.

The outlet 208A of the solid-liquid separation part 200A is in communication with the inlet of the decomposition part 300 to have a matching shape with the inlet of the lower module 750. As an example, as illustrated in FIG. 14a, the lower outlet 208A is enabled to be provided in a polygonal shape that satisfies a larger diameter than the opening of the side surface 211 of the filter part 210A, and the shape is not limited thereto.

The solid-liquid separation space A as a region located at the rear within the case is a space between the inlet and the drain hole that accommodates the filter part 210.

The filter part 210A includes a coupling portion connected to the transfer body 230A on the side surface 211.

When the filter part 210A and the case 201 are fitted to each other, liquid flowing from the side surface of the filter part 210A flows to the outlet 270 through a case bottom slope in the solid-liquid separation space A via a separation space created at some borders.

The case 201 includes a side wall surrounding the filter part 210A, and the side wall is enabled to be formed to have a curved surface in a region corresponding to the filter part 210 as illustrated in FIG. 14a.

A transfer space B is formed in front of the solid-liquid separation space A.

The transfer space B is mainly an empty space, which may have the filter part 210A placed therein by movement of the filter part 210 by the transfer module or may be empty due to retraction of the filter part 210A.

The case 201 of the solid-liquid separation part 200A surrounding the transfer space B may be formed with a curved surface along a trajectory along which the circular filter part 210 moves.

The solid-liquid separation part 200A includes, on one side surface of the case 201, a transfer module for moving the filter part 210A between the transfer space B and the solid-liquid separation space A on the horizontal plane.

The transfer module includes a transfer motor 220A, and a transfer arm 230A connected to a shaft of the transfer motor 220A.

The motor 220A rotates the transfer arm 230A in order to rotatably move the filter part 210 from the rear to the front from the solid-liquid separation space A to the transfer space B.

The transfer arm 230A is constituted by a transfer body 238 and a motor connection portion 239, and the transfer body 238 is formed to surround the side surface 211 of the filter part 210A and seal the solid-liquid separation space A and the transfer space B. Accordingly, the transfer body 238 may be formed as a curved surface having the same curvature while maintaining a separation distance spaced apart by a predetermined distance from the side surface 211 to surround the side surface 211 of the filter part 210A.

Accordingly, the transfer arm 230A may be implemented in a form where a portion of a cylinder is cut.

The motor connection portion 239 extends from one side of the transfer body 238 and is connected to a shaft of the motor 220A such that when the motor 220A is driven, the transfer body 238 may be rotationally moved around the shaft as an axis while rotating according to rotation of the shaft.

Therefore, the transfer body 230A that rotates around the shaft as an axis has the other end connected to a side surface fixing portion of the filter part 210A such that only the side surface 211 of the filter part 210A is selectively movable. In this case, the transfer body 230A and the side surface 211 of the filter part 210A are rotatably coupled such that the side surface 211 of the filter part 210A rotates around the shaft of the motor 220A and moves in the horizontal plane. Such movement in the horizontal plane is defined as moving the side surface 211 of the filter part 210A from the rear to the front.

As a result, the motor 220A may be rotated when the operation start is recognized by rotation of the inlet cover 111 after the food is input into the filter part 210A as illustrated in FIG. 14b. Alternatively, the motor may be operated by receiving a start signal from the user, and such a start signal from the user is enabled to be received from a user terminal in which an application capable of interlocking with the food disposal apparatus 10 is installed. The rotational driving of the motor 220A may be controlled by a control unit.

The motor 220A may be placed inside the case 201, for example, on a side surface of a central region of the case 201, that is, on one side in a boundary space between the solid-liquid separation space A and the transfer space B.

Therefore, based on a position of the motor 220A, the solid-liquid separation space A and the transfer space B may have a shape placed along a circular trajectory.

A sealing force of the transfer body 230 is enabled to be implemented by a sealing portion surrounding A border of the transfer body 230A.

In addition, the sealing force of the transfer body 230 may prevent liquid from penetrating the front of the transfer body 230 and flowing into the decomposition part 300 during solid-liquid separation of food without a separate cover for separating the solid-liquid separation space A and the transfer space B, and when a cover is present, without movement of the cover.

In this case, even when the transfer body 230A is in a stationary state in which the transfer body 230 does not transfer the filter part 210A and remains in the solid-liquid separation space A, a border sealing portion of the transfer body 230A may have a double sealing structure with a border of the case.

That is, in a boundary region between the solid-liquid separation space A and the transfer space B, the side wall of the case 201 of the solid-liquid separation part 200 may further include a case sealing member that engages with the sealing portion of the transfer body 230A.

By such a double sealing structure, the solid-liquid separation space A is be sealed by the transfer body 230 during solid-liquid separation of food to prevent liquid from penetrating the decomposition part 300.

Similarly, the solid-liquid separation part 200A of FIGS. 14a and 14b may also further include a separate upper deodorization module for absorbing and discharging odors and water vapor inside the case 201 at an exterior of the case 201.

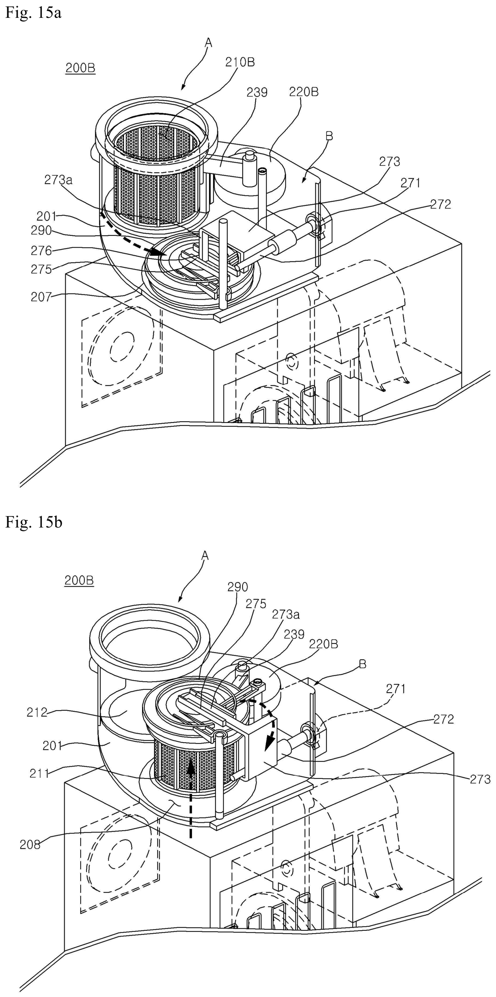

FIGS. 15a and 15b are state diagrams of a solid-liquid separation part 200B according to a third embodiment.

Referring to FIGS. 15a and 15b, the solid-liquid separation part 200B according to the third embodiment of the present disclosure is a module for separating solids and liquids of food flowing through an inlet 2011 of the solid-liquid separation part 200B and transferring the solids and the liquids to the decomposition part 300 similarly as described above.

Referring to FIG. 15a, the solid-liquid separation part 200B of the third embodiment is divided into a solid-liquid separation space A where solid-liquid separation is performed and a transfer space B where transfer of solids is performed, and while solid-liquid separation is performed in the solid-liquid separation space A, the transfer space B is sealed from the food and is structured to prevent the liquid of the food from flowing therein.

In the solid-liquid separation part 200B of FIG. 15 above, an inlet 2011 formed at a rear of an upper surface of a case 201 of the solid-liquid separation part 200B and is connected to the drain 4 of the sink 1 as described above, and an outlet 208B is placed on a bottom surface of the upper module 710, i.e., a front of a bottom surface of a housing of the solid-liquid separation part 200B, and communicates with the decomposition part 300.

To this end, the solid-liquid separation part 200B is provided such that at least one region overlaps above the decomposition part 300, and the outlet of the solid-liquid separation part 200B is provided to be located in this overlapping region. As a result, food discharged through the outlet of the solid-liquid separation part 200B falls freely and is transferred to the decomposition part 300. Therefore, the solid-liquid separation part 200B rotatably moves the input food from the rear to the front on the horizontal plane, and transfers the food to the decomposition part 300.

The case 201 of the solid-liquid separation part 200B may be formed with a curved surface along a movement trajectory of the filter part 210B as illustrated in FIG. 15a. Specifically, the case 201 is formed to accommodate both the solid-liquid separation space A and the transfer space B. As an example, the case may be formed to surround the filter part 210B inserted into the inlet, and the filter part 210B is separable into the side surface and the bottom surface as described above.

The outlet 208 of the solid-liquid separation part 200B is in communication with the inlet of the decomposition part 300 to have a matching shape with the inlet of the lower module 750.

In this case, the solid-liquid separator 200B may further include an outlet cover 290 capable of opening and closing the outlet.

The solid-liquid separation part 200 may separately include a motor 271 for opening and closing the outlet cover 290. As an example, as shown in FIGS. 15a and 15b, the solid-liquid separation part 200 further includes a second motor 271 and further include a cover connection member 273 connected to a shaft 272 of the second motor 271 to lift the outlet cover 290 upward.

The cover connection member 273 includes a first surface extending vertically in an axial direction of the shaft 272, a second surface bent from the first surface and extending parallel to the outlet cover 290, and a third surface bent from the second surface and extending parallel to the first surface.

The first surface, the second surface, and the third surface form a " 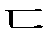 " shape, and the second surface extends the longest, and the other end of the third surface is connected to rotate, on a top surface of the outlet cover 270, with a coupling portion 275 of the top surface.

Accordingly, as the shaft 272 rotates according to the driving of the second motor 271, the " 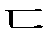 "-shaped cover connection member 273 is rotated so that the third surface rotates relative to the top surface of the cover 270 and overlaps with the top surface of the cover 270.

By such rotation, the outlet cover 290 is lifted upward by a distance equal to a sum of lengths of the second surface and the third surface.

By such upward movement of the outlet cover 290, the outlet 208 is opened and a space is formed between the cover 270 and the outlet 208.

Meanwhile, the third embodiment includes the motor 220B as in the second embodiment, and includes a transfer connection portion 239 for rotating the filter part 210B on the shaft of the motor 220B. In this case, unlike the second embodiment, the transfer connection portion 239 does not include a body for sealing the solid-liquid separation space A, and may be present only as an extension body of the connection portion 239 connected to the shaft. That is, the other end of the connection portion 239 is directly connected to the filter part 210B to directly rotate the filter part 210B.

Therefore, the transfer connection portion 239 that rotates around the shaft as the axis has the other end connected to a fixing portion of the side surface 211 of the filter part 210B, so that only the side surface 211 of the filter part 210B selectively moves and is seated in a space between the cover 270 and the outlet 208.

That is, the transfer connection portion 239 and the side surface 211 of the filter part 210B are rotatably coupled such that the side surface 211 of the filter part 210B rotatably moves around the shaft of the motor 220B, so a position of the side surface 211 of the filter part 210B varies on the horizontal plane. Such rotational movement on the horizontal plane is defined as moving the side surface 211 of the filter part 210B from the rear to the front.

As a result, the first motor 220B and the second motor 271 may be rotated when the operation start is recognized by rotation of the inlet cover 111 after the food is input into the filter part 210B as illustrated in FIG. 15b. Alternatively, the first and second motors 220B and 271 may be operated by receiving a start signal from the user, and such a start signal from the user is enabled to be received from a user terminal in which an application capable of interlocking with the food disposal apparatus 10 is installed. The rotational driving of the first motor 220B can be controlled by the control unit.

The first and second motors 220B and 271 may be placed inside the case 201, for example, on the side surface of the case 201, that is, the first motor 220B may be placed on one side in a boundary space between the solid-liquid separation space A and the transfer space B, and the second motor 271 may be placed in the transfer space B.

Therefore, based on a position of the first motor 200B, the solid-liquid separation space A and the transfer space B may have a shape placed along a circular trajectory.

As such, when a separate outlet cover 290 is included, sealing of the decomposition part 300 during solid-liquid separation is implemented, so a separate transfer body 230 is not required. Therefore, since the moving transfer arm 239 is not required to provide even a sealing function, it is possible to omit a complex structure.

Similarly, the solid-liquid separation part 200B of FIGS. 15a and 15b may also further include a separate upper deodorization module for absorbing and discharging odors and water vapor at an exterior of the case 201.

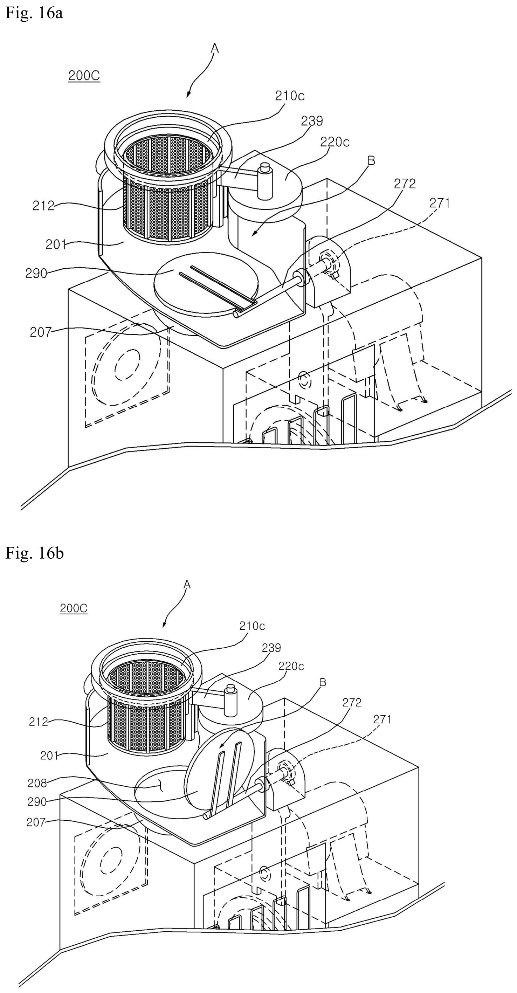

FIGS. 16a and 16b are state diagrams of a solid-liquid separation part 200C according to a fourth embodiment.

Referring to FIGS. 16a and 16b, the solid-liquid separation part 200C according to the fourth embodiment of the present disclosure is a module for separating solids and liquids of food flowing through an inlet 2011 of the solid-liquid separation part 200C and transferring the solids and the liquids to the decomposition part 300 similarly as described above.

Referring to FIG. 16a, the solid-liquid separation part 200C of the fourth embodiment is divided into a solid-liquid separation space A where solid-liquid separation is performed and a transfer space B where transfer of solids is performed, and while solid-liquid separation is performed in the solid-liquid separation space A, the transfer space B is sealed from the food and is structured to prevent the liquid of the food from flowing therein.

In the solid-liquid separation part 200B of FIG. 15 above, an inlet 2011 formed at a rear of an upper surface of the solid-liquid separation part 200C and is connected to the drain 4 of the sink 1 as described above, and an outlet 208 is placed on a bottom surface of the upper module 710, i.e., a front of a bottom surface of a housing of the solid-liquid separation part 200B, and communicates with the decomposition part 300.

To this end, the solid-liquid separation part 200C is provided such that at least one region overlaps above the decomposition part 300, and the outlet 208 of the solid-liquid separation part 200C is provided to be located in this overlapping region. As a result, food discharged through the outlet 208 of the solid-liquid separation part 200C falls freely and is transferred to the decomposition part 300. Therefore, the solid-liquid separation part 200C horizontally moves the input food from the rear to the front, and transfers the food to the decomposition part 300.

The case 201 of the solid-liquid separation part 200C may be formed with a curved surface along a movement trajectory of the filter part 210C as illustrated in FIG. 16a. Specifically, the case 201 is formed to accommodate both the solid-liquid separation space A and the transfer space B. As an example, the case 201 may be formed to surround the filter part 210C inserted into the inlet, and the filter part 210C is separable into the side surface 211 and the bottom surface 212 as described above.

The outlet 208 of the solid-liquid separation part 200C is in communication with the inlet of the decomposition part 300 to have a matching shape with the inlet of the lower module 750. As an example, as illustrated in FIG. 16a, the lower outlet is enabled to be provided in a polygonal shape that satisfies a larger diameter than the opening of the side surface 211 of the filter part 210C, and the shape is not limited thereto.

In this case, the solid-liquid separator 200C may further include an outlet cover 290 capable of opening and closing the outlet 208.

The solid-liquid separation part 200C may separately include a motor 271 for opening and closing the outlet cover 290. As an example, as shown in FIGS. 16a and 16b, the solid-liquid separation part 200 further includes a second motor 271 and the outlet cover 290 connected to the shaft 272 of the second motor 271 rotates to open the outlet 208.

As the second motor 271 is driven, the shaft 272 rotates and the outlet cover 290 rotates together vertically to open the outlet 208.

Meanwhile, the third embodiment includes a first motor 220C as in the second embodiment, and includes a transfer connection portion 239 for rotating the filter part 210C on the shaft of the motor 220C. In this case, unlike the second embodiment, the transfer connection portion 239 does not include a body for sealing the solid-liquid separation space A, and may be present only as an extension body of the connection portion 239 connected to the shaft. That is, the other end of the connection portion 239 is directly connected to the filter part 210 to directly rotate the filter part 210C.

Therefore, the transfer connection portion 239 that rotates around the shaft as the axis has the other end connected to a fixing portion of the side surface 211 of the filter part 210C, so that only the side surface 211 of the filter part 210C selectively moves and the cover 270 rotates and is seated in a space above the opened outlet 208.

That is, the transfer connection portion 239 and the side surface 211 of the filter part 210C are rotatably coupled such that the side surface 211 of the filter part 210C rotates around the shaft of the motor 220B, so a position of the side surface 211 of the filter part 210B varies on the horizontal plane. Such rotational movement on the horizontal plane is defined as moving the side surface 211 of the filter part 210C from the rear to the front.

As a result, the first motor 220C and the second motor 271 may be rotated when the operation start is recognized by rotation of the inlet cover 111 after the food is input into the filter part 210C as illustrated in FIG. 16b. Alternatively, the first and second motors 220C and 271 may be operated by receiving a start signal from the user, and such a start signal from the user is enabled to be received from a user terminal in which an application capable of interlocking with the food disposal apparatus 10 is installed. Rotational driving of the motors 220C and 271 may be controlled by the control unit.

The first and second motors 220C and 271 may be placed inside the case, for example, biased to the side surface of the case, that is, the first motor 220C may be placed on one side in a boundary space between the solid-liquid separation space A and the transfer space B, and the second motor 271 may be placed biased to the transfer space B.

Therefore, based on a position of the first motor 200C, the solid-liquid separation space A and the transfer space B may be placed along the circular trajectory.

As such, when a separate outlet cover 290 is included, sealing of the decomposition part 300 during solid-liquid separation is implemented, so a separate transfer body is not required. Therefore, since the moving transfer is not required to provide even a sealing function, it is possible to omit a complex structure.

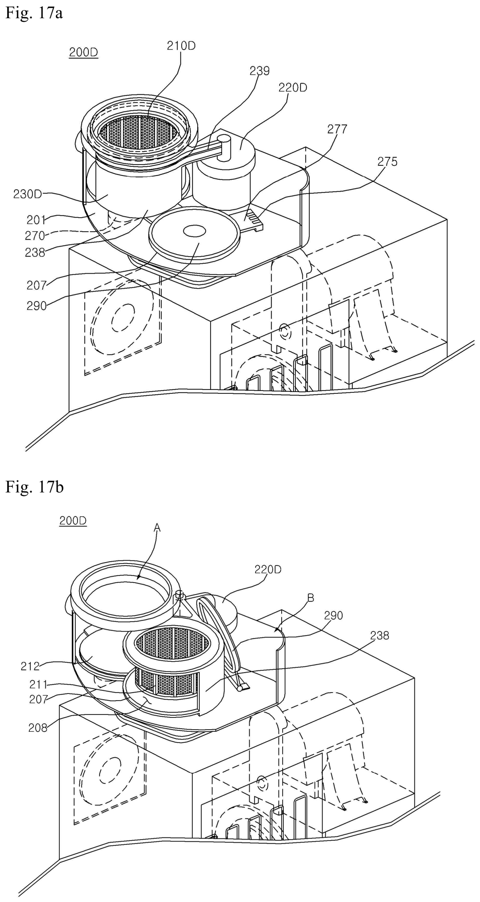

FIGS. 17a and 17b are state diagrams of a solid-liquid separation part 200D according to a fifth embodiment.

Referring to FIGS. 17a and 17b, the solid-liquid separation part 200D according to the fifth embodiment of the present disclosure is a module for separating solids and liquids of food flowing through an inlet 2011 of the solid-liquid separation part 200D and transferring the solids and the liquids to the decomposition part 300 similarly as described above.

Referring to FIG. 17a, the solid-liquid separation part 200D is divided into a solid-liquid separation space A where solid-liquid separation is performed and a transfer space B where transfer of solids is performed, and while solid-liquid separation is performed in the solid-liquid separation space A, the transfer space B is sealed from the food and is structured to prevent the liquid of the food from flowing therein.

A basic structure of the fifth embodiment is the same as a basic structure of the second embodiment.

However, the fifth embodiment is a structure including a transfer body 230D and is a structure further including an outlet cover 290.

In the embodiment described above, when the transfer body 230D is included, the embodiment is described as an optional structure that does not include the outlet cover 290, but the fifth embodiment may include both the transfer body 230D and the outlet cover 290.

When both the transfer body 230D and the outlet cover 290 are included as such, liquid flowing to the filter part 210D during solid-liquid separation is primarily blocked from flowing to the outside by sealing of the transfer body 230D, and secondarily blocked by the outlet cover 290 that blocks entry to the decomposition part 300.

Further, by separately forming the outlet cover 290 on the decomposition part 300, odors generated during continuous decomposition in the decomposition part 300 in various cases may always be blocked from being delivered to the user through the drain 4 of the sink 1 drain 4, i.e., the inlet 11.

However, due to structural complexity, as illustrated in FIG. 17a, the outlet cover 290 may be pushed up in conjunction with the rotational movement of the transfer body 230D without a separate motor.

That is, one end of the outlet cover 290 may be hinge-coupled 276 to be rotatable relative to the bottom surface of the case 201, which means a structure that opens and closes the outlet cover 290 upward.

In this case, one side of the outlet cover 290 and a bottom border of the transfer body 230D are placed to contact each other, and a side wall of the outlet cover 290 has an inclined surface that is inclined downward with respect to a rotational direction of the transfer body 230D. Therefore, when the transfer body 230D rotates toward the outlet 208, the outlet cover 290 rotates to be lifted upward by pushing up the inclined surface of the outlet cover 290.

Therefore, rotation of the transfer body 230D and the outlet cover 290 may occur simultaneously by a single motor 220D.

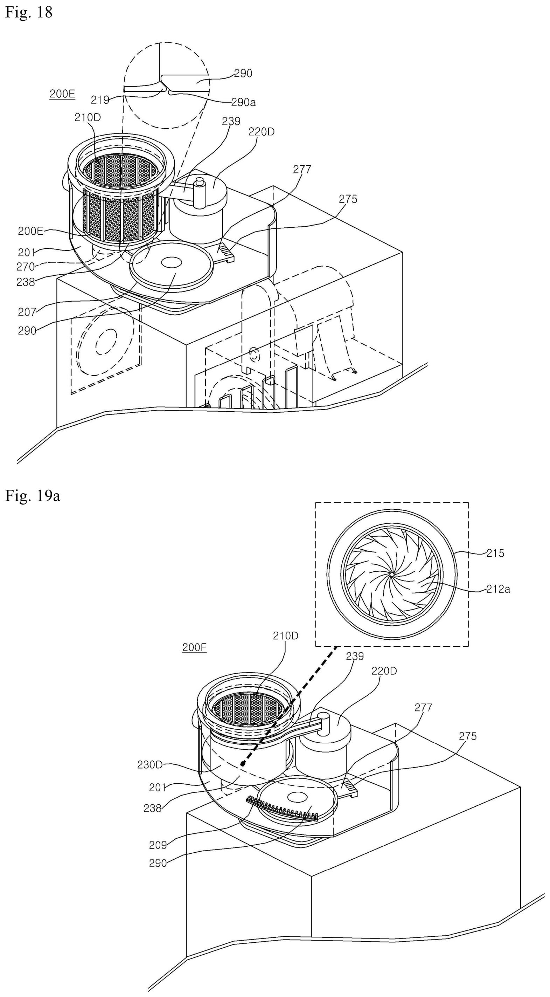

In this case, as in the sixth embodiment of FIG. 18, the transfer body 230D is replaceable with the transfer connection portion 239, which is configured similarly to the fourth embodiment having the transfer connection portion 239 and the outlet cover 280.

In this case, the side surface of the filter part 210D rotates by the transfer connection portion 239, and the side surface 211 of the filter part 210D is included so that an end 219 of a lower rim 2114 protrudes outward, and is placed to contact an inclined surface 290a of the outlet cover 290. In this case, the inclined surface 290a of the outlet cover 290 is inclined so as to be recessed inward as the inclined surface 290a goes downward, so the lower rim 2114 of the side surface 211 pushes up the inclined surface 290a of the outlet cover 290 by rotational movement of the side surface 211 of the filter part 210D, so that the outlet cover 290 rotates to be lifted up to open the outlet 208. That is, the side surface 211 of the filter part 210D is inclined so that the end 219 of the lower rim 2114 protrudes outward, and movement starts with the inclined surface 290a of the outlet cover 290 placed on the end 219, so that the movement and the opening of the outlet cover 290 occur simultaneously.

In the case of FIG. 18, both structural simplicity and sealing force may be secured, and it may be economical as driving is possible by a single motor.

FIGS. 19a to 19c are state diagrams of a solid-liquid separation part 200F of a seventh embodiment.

Referring to FIGS. 19a to 19c, the solid-liquid separation part 200F according to the seventh embodiment of the present disclosure is a module for separating solids and liquids of food flowing through an inlet 2011 of the solid-liquid separation part 200F and transferring the solids and the liquids to the decomposition part 300 similarly as described above.

As illustrated in FIG. 19a, the solid-liquid separation part 200F is divided into a solid-liquid separation space A where solid-liquid separation is performed and a transfer space B where transfer of solids is performed, and while solid-liquid separation is performed in the solid-liquid separation space A, the transfer space B is sealed from the food and is structured to prevent the liquid of the food from flowing therein.

A basic structure of the seventh embodiment is the same as the basic structure of the fifth embodiment. That is, the seventh embodiment is a structure including the transfer body 230 and is a structure further including the outlet cover 290.

However, in the seventh embodiment, a bottom surface 212a of the filter part 210F may have an aperture structure.

That is, the filter part 210F is not separated into the side surface 211 and the bottom surface 212a, and has the aperture structure on the bottom surface 212a, so the bottom surface 212a is automatically opened and closed depending on a position.

In the seventh embodiment, when the filter part 210F is positioned in the solid-liquid separation space A, an aperture is closed such that liquid flows out from the side surface 211 through some openings, or liquid is separated and flows through an opening of the bottom surface 212a.

Next, a motor 220F may be rotated when the operation start is recognized by rotation of the inlet cover 111 after the food is input into the filter part 210F. Alternatively, the motor 220F may be operated by receiving a start signal from the user, and such a start signal from the user is enabled to be received from a user terminal in which an application capable of interlocking with the food disposal apparatus 10 is installed. Rotational driving of the motor 220F may be controlled by the control unit.

One side of the outlet cover 290 and a bottom border of a transfer body 230F are placed to contact each other, and a side wall of the outlet cover has an inclined surface that is inclined downward with respect to a rotational direction of the transfer body 230F. Therefore, when the transfer body 230 rotates toward the outlet 208, the outlet cover 290 may rotate to be lifted upward by pushing up the inclined surface of the outlet cover 290.

Therefore, rotation of the transfer body 230D and the outlet cover 290 may occur simultaneously by a single motor 220F.

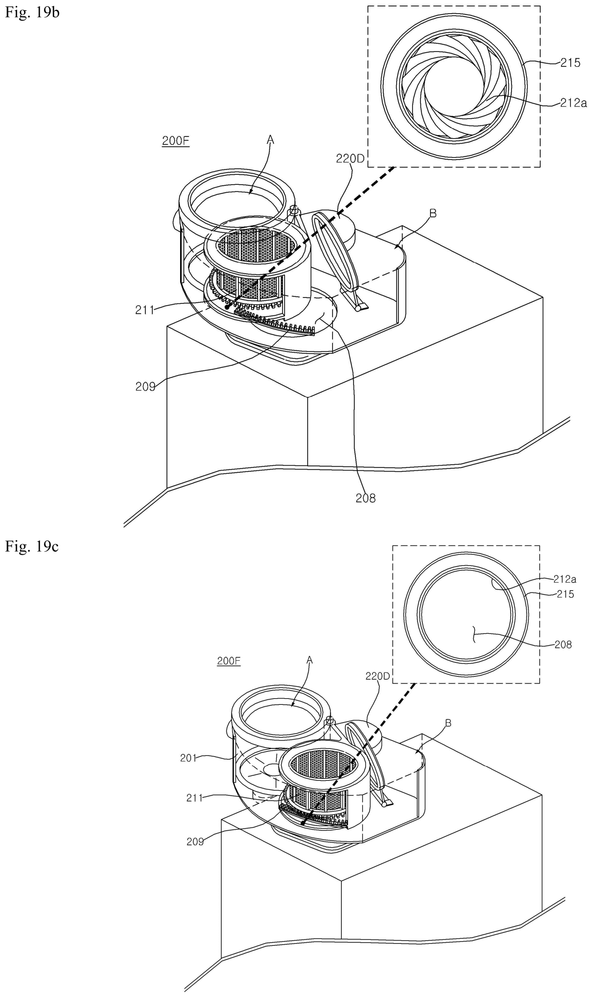

In this case, as illustrated in FIG. 19b, a gear 215 of the aperture engages with a gear 209 placed on a path in which the filter part 210F rotates around the shaft as the axis and moves to the solid-liquid separation space A and the transfer space B, thereby opening the bottom surface 212a. Therefore, the bottom surface 212a of the filter part 210F is gradually opened from a central region, and as illustrated in FIG. 19c, the outlet cover 290 is completely opened to expose the lower outlet 208, and when the filter part 210F is positioned above the outlet 208, the aperture is fully opened so that the lower portion of the filter part 210 is completely opened and communicates with the outlet 208.

The gear 209 placed on the side surface of the case 201 is positioned on a rotational trajectory of the filter part 210F and is formed to engage with the aperture gear 215 of the filter part 210F.

When the gears 209 and 215 are engaged and the filter part 210F rotates by driving of the motor 220F, the aperture of the bottom surface 212a of the filter part 210F is opened by this rotational movement such that the aperture is fully opened when the filter part 210F is placed exactly above the outlet 208.

When the bottom surface 212a of the filter part 210F has an opening and closing structure, food is enabled to be transferred without physical separation and coupling of the filter part 210F, thereby preventing the food from being injected into the drain due to misalignment.

When both the transfer body 230F and the outlet cover 290 are included as such, liquid flowing to the filter part 210F during solid-liquid separation is primarily blocked from flowing to the outside by sealing of the transfer body 230F, and secondarily blocked by the outlet cover 290 that blocks entry to the decomposition part 300.

Further, by separately forming the outlet cover 290 of the decomposition part 300, odors generated during continuous decomposition in the decomposition part 300 in various cases may always be blocked from being delivered to the user through the drain 4 of the sink 1 drain 4, i.e., the inlet.

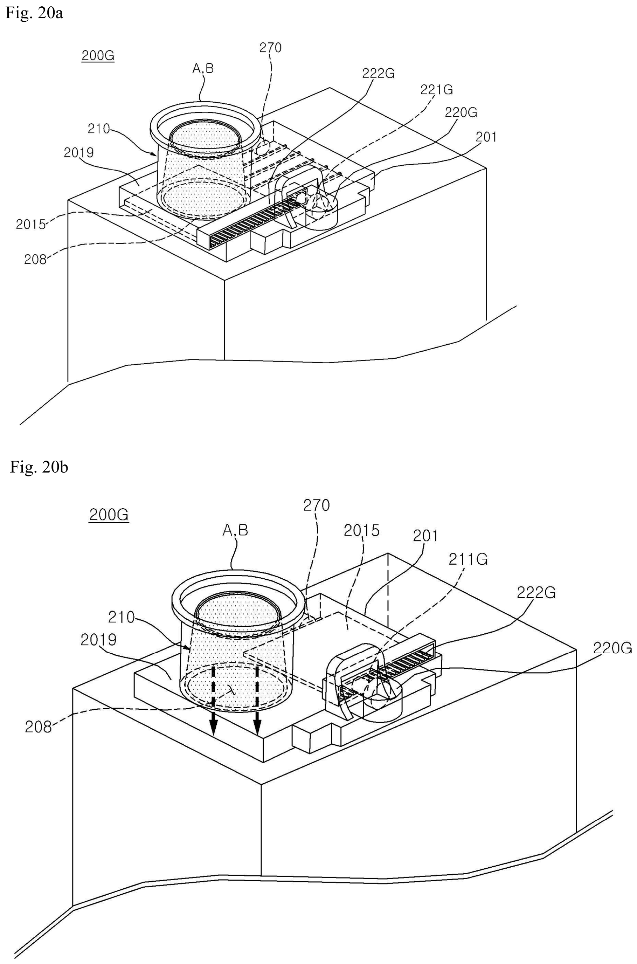

FIGS. 20a and 20b are state diagrams of a solid-liquid separation part 200G according to an eighth embodiment.

Referring to FIGS. 20a and 20b, the solid-liquid separation part 200G according to the eighth embodiment of the present disclosure is a module for separating solids and liquids of food flowing through an inlet 2011 of the solid-liquid separation part 200G and transferring the solids and the liquids to the decomposition part 300 similarly as described above.

In this case, the solid-liquid separation part 200G of the eighth embodiment has a different placement from the first to seventh embodiments described above.

That is, in the solid-liquid separation part 200G of the eighth embodiment, the inlet and the outlet are placed on the straight line in the vertical direction. Therefore, the opening 208 of the case is formed so that the decomposition part 300 that receives food solids while overlapping with the outlet 208 also overlaps with the inlet 2011 of the solid-liquid separation part 200G.

Therefore, the solid-liquid separation part 200G according to the eighth embodiment is not placed to move in the front-rear direction of the filter part 210, but is placed to cover as part of the bottom surface of the case 201, and a moving plate 2015 is placed arranged to move in the left-right direction.

Therefore, an opening connected to the drain 270 is positioned biased to the rear on a bottom surface of the case, and the bottom surface is formed to have an inclined surface toward the opening.

In this case, a transfer module is formed on the bottom surface to move horizontally in the left-right direction by means of a motor 220G.

The outlet 208 is formed at a left side of the bottom surface, and the moving plate 2015 is placed while covering the outlet 208. The moving plate 2015 is formed to cover a portion of the floor surface, for example, 1/2 or 1/3, and may preferably be formed to cover an area of the outlet 208, more preferably, an area of a bottom surface of the filter part 210G.

On one side surface of the moving plate 2015, a motor 220G, a pinion 221G, and a linear rack 222G for horizontally moving the moving plate 2015 in the left-right direction may be formed.

Since a configuration of the motor 220G, the pinion 221G, and the linear rack 222G is similar to a first configuration, description thereof is omitted.

That is, the moving plate 2015 is attached to the linear rack 222G, and the pinion 221G rotates according to the driving of the motor 220G, and by a gear of the linear rack 222G that engages with the pinion 221G, the linear rack 222G moves left and right, and accordingly the moving plate 2015 moves left and right.

In this case, a fixing plate 2019 for fixing the filter part 210G may be separately formed on the moving plate 2015.

The fixing plate 2019 is formed to be coupled with a lower rim of the filter part 210G, and serves to fix the filter part 210G with a bottom of the filter part 210G in an open state. The fixing plate 2019 is enabled to be formed integrally with the case.

As such, with the filter part 210G fixed to the fixing plate 2019 and placed between the inlet 2011 and the outlet 208, solid-liquid separation of the food proceeds, and in that state, the filter part 210G does not move while the moving plate 2015 at the bottom moves to open a lower portion of the filter part 210G and discharge the food waste to the decomposition part 300 through the outlet 208.

As such, an effect similar to the previous embodiment can be achieved by movement of the moving plate 2015 without movement of the filter part 210G, and sealing of the decomposition part 300 during solid-liquid separation can be accomplished by the moving plate 2015.

As described above, the embodiment has described various embodiments for the solid-liquid separation part 200, but is not limited thereto, and various embodiments that can prevent input of liquid by sealing the decomposition part during solid-liquid separation of the food on the horizontal plane are applicable.

This embodiment includes each of the embodiments and various modifications thereof discussed in the present disclosure. According to the embodiment, at least one or more features described in one embodiment or example may be equally applied to other embodiments or examples described above. Features of one or more of the aforementioned embodiments or examples may be combined with each of the aforementioned embodiments or examples. One or more embodiments of the embodiment or any combination thereof in whole or in part also forms part of the embodiment.

### [DETAILED DESCRIPTION OF MAIN ELEMENTS]

| | | | |
|---|---|---|---|
| 10: | food disposal apparatus | 700: | main body |
| 710: | upper module | 750: | lower module |
| 11: | inlet of food disposal apparatus | 12: | outlet of food disposal apparatus |
| 100: | inlet part | 111: | inlet cover |
| 200: | solid-liquid separation part | 300: | decomposition part |
| 400: | transfer part | 500: | collection part |

## Claims

1. A food disposal apparatus comprising:
a solid-liquid separation part, which includes a filter part for receiving food from an inlet and separating liquid from the food, and which transfers, on the horizontal plane, at least a portion of the filter part which is holding the food and drops the food downward; and
a decomposition part which is placed below the solid-liquid separation part and decomposes the dropped food by means of microorganisms,
wherein the filter part is enabled to be separated from the solid-liquid separation part through the inlet.

2. The food disposal apparatus of claim 1, wherein the filter part includes a side surface including perforations for separating and discharging only liquid from the food, and a bottom surface detachable from or coupleable to the side surface.

3. The food disposal apparatus of claim 2, wherein the side surface of the filter part includes a filter surface which is perforated to separately discharge the liquid from the food, and a lower rim supporting a lower portion of the filter surface and including at least one coupling protrusion for sliding coupling with the bottom surface of the filter part,
the bottom surface of the filter part includes a flat support surface, and a guide protrusion which protrudes upward from the support surface and guides sliding coupling with the side surface, and at least one coupling hole to which the coupling protrusion of the lower rim of the side surface of the filter part is fitted is formed on a side surface of the guide protrusion.

4. The food disposal apparatus of claim 2, wherein the solid-liquid separation part is divided into a solid-liquid separation space where solids and liquid of the food are separated and a transfer space where the solid food is transferred to the decomposition part.

5. The food disposal apparatus of claim 4, wherein a lower portion of the solid-liquid separation space is connected to a drain that discharges only liquid from the food, and an outlet of the solid-liquid separation part which communicates with an inlet of the decomposition part is formed at a lower portion of the transfer space.

6. The food disposal apparatus of claim 5, wherein when the filter part is placed in the solid-liquid separation space, the transfer space is sealed from the solid-liquid separation space.

7. The food disposal apparatus of claim 6, wherein
the solid-liquid separation part further includes a transfer module performing a movement for moving the solid food from the solid-liquid separation space to the transfer space.

8. The food disposal apparatus of claim 7, wherein the transfer module includes a transfer body connected to the side surface of the filter part and moving the side surface of the filter part on the horizontal plane, and a movement motor moving the transfer body.

9. The food disposal apparatus of claim 8, wherein the transfer module further includes a pinion that rotates in conjunction with a shaft of the movement motor, and a linear rack which moves linearly by the pinion, and
the transfer body is connected to the linear rack, and moves the side surface of the filter part between the solid-liquid separation space and the transfer space on the horizontal plane.

10. The food disposal apparatus of claim 9, wherein the transfer body includes a first body which extends from the linear rack, and a second body which is elastically coupled to the first body, and fixed to the side surface of the filter part and moves the side surface of the filter part according to the movement of the linear rack.

11. The food disposal apparatus of claim 10, wherein the second body includes a front surface facing the first body and a rear surface coupled to the side surface of the filter part, and
a fixing protrusion which fixes an elastic body elastically coupled to the first body protrudes on the front surface.

12. The food disposal apparatus of claim 11, wherein the fixing protrusion protrudes at a central portion of the second body.

13. The food disposal apparatus of claim 10, wherein one side of the first body is bent and extended from the linear rack, and the other side of the first body is a free end.

14. The food disposal apparatus of claim 10, wherein a movement distance of the second body is the same as a movement distance of the filter part.

15. The food disposal apparatus of claim 8, wherein a first sealing member is formed at a border of the transfer body, a second sealing member is formed on a boundary portion between the solid-liquid separation space and the transfer space, and the first sealing member and the second sealing member form a double sealing structure.

16. The food disposal apparatus of claim 15, wherein the second sealing member forms a closed loop surrounding the boundary portion between the solid-liquid separation space and the transfer space on an internal surface of the case of the solid-liquid separation part, and when the filter part is located in the solid-liquid separation space, and the transfer body stops at boundary portion between the solid-liquid separation space and the transfer space, the first sealing member is closely attached to a front surface of the second sealing member to form the double sealing structure.

17. The food disposal apparatus of claim 9, wherein the transfer module further includes at least one guide bar extending from the case of the solid-liquid separation part to guide the linear movement of the linear rack.

18. The food disposal apparatus of claim 8, wherein the transfer module includes a transfer connection portion which rotates around the shaft of the movement motor, and moves the side surface of the filter part between the solid-liquid separation space and the transfer space.

19. The food disposal apparatus of claim 8, wherein the solid-liquid separation part further includes an outlet cover which covers the outlet of the solid-liquid separation part, and
when the side surface of the filter part moves to the transfer space, the outlet cover is opened.

20. The food disposal apparatus of claim 19, wherein the outlet cover is hinge-coupled to the bottom surface of the case so that the outlet cover is lifted upward by pushing the side surface of the outlet cover by rotatable movement of the side surface of the filter part.
